# EUROPEAN PATENT APPLICATION

(11) **EP 4 838 945 A1**
(43) Date of publication of application: **11.11.2026**
(21) Application number: 25741433.4
(22) Date of filing: 10.01.2025
(51) Int. Cl.: H04W 28/02

(54) **COMMUNICATION METHOD AND APPARATUS**

(30) Priority: 15.01.2024 CN 202410057918
(71) Applicant: Huawei Technologies Co., Ltd., Shenzhen, Guangdong 518129 (CN)
(72) Inventor: GAO, Guojuan, Shenzhen, Guangdong 518129 (CN); LI, Hancheng, Shenzhen, Guangdong 518129 (CN)
(74) Representative: Huawei European IPR
(86) International application number: PCT/CN2025/071846
(87) International publication number: WO 2025/152871

(57) **Abstract**

This application provides a communication method and apparatus. The method includes: receiving first indication information from a first user plane function network element, where the first indication information indicates first interface latency, and a first interface is between the first user plane function network element and a first edge application server that are selected for communication of a terminal device; and performing at least one of the following operations based on the first interface latency: selecting a second user plane function network element; selecting a second edge application server; selecting a second application on the first edge application server, or selecting a second tunnel on the first interface, where the first function network element is a network element that manages a user plane function network element and an edge application server. According to the solutions of this application, a new network element is selected based on interface latency to replace a current network element to transmit communication data, thereby effectively mitigating communication quality deterioration caused by abnormal interface latency.

## Description

This application claims priority to Chinese Patent Application No. 202410057918.3, filed with the China National Intellectual Property Administration on January 15, 2024 and entitled "COMMUNICATION METHOD AND APPARATUS", which is incorporated herein by reference in its entirety.

### TECHNICAL FIELD

This application relates to the field of communication technologies, and more specifically, to a communication method and apparatus.

### BACKGROUND

One or more edge application servers (edge application servers, EASs) deployed at an edge of an external network may provide services for applications. However, when applications in the one or more edge application servers deployed at the network edge are accessed, communication quality may deteriorate. Therefore, how to resolve communication quality deterioration is an urgent technical problem to be resolved.

### SUMMARY

This application provides a communication method and apparatus that can effectively resolve communication quality deterioration caused by abnormal interface latency or excessive load on an edge application server.

According to a first aspect, a communication method is provided. The method may be performed by a core network element, or may be performed by a component (for example, a chip, a chip system, or a circuit) of the core network element. This is not limited herein. For ease of description, the following uses an example in which the method is performed by a first function network element for description.

The first function network element is a network element that manages a session between a user plane function network element and an edge application server, and the first function network element may be a service function (service function, SRF) network element or a local session management function (local session management function, L-SMF) network element.

In some possible implementations, the first function network element may alternatively be an intermediate session management function (intermediate session management function, I-SMF) network element.

The method includes: The first function network element receives first indication information from a first user plane function network element, where the first indication information indicates first interface latency, and the first interface latency includes at least one of the following: interface latency of the first user plane function network element for a first application, interface latency of the first user plane function network element for a first edge application server, or interface latency of the first user plane function network element for a first tunnel, where the first interface is between the first user plane function network element and the first edge application server that are selected for communication of a terminal device; and performs at least one of the following operations based on the first interface latency: reselecting a second user plane function network element, where the second user plane function network element is different from the first user plane function network element; selecting a second edge application server, where the second edge application server is different from the first edge application server; selecting a second application on the first edge application server, where the second application is different from the first application; or selecting a second tunnel of the first interface, where the second tunnel is different from the first tunnel.

Optionally, the first interface is a first N6 interface.

Optionally, the first indication information includes at least one of the following: information indicating a status of the first interface latency, or information indicating a latency value of the first interface latency.

It should be understood that the first function network element may perceive interface latency between the first user plane function network element and the first edge application server by receiving interface latency of a corresponding granularity (for example, the granularity may be that of the first application, or the granularity may be that of the first edge application server, or the granularity may be that of the first tunnel).

Based on the foregoing solution, the first function network element receives the interface latency of the corresponding granularity, to perceive, in a timely manner, whether the interface latency is abnormal, and perform a reselection operation when the interface latency is abnormal, thereby effectively mitigating communication quality deterioration caused by abnormal interface latency.

With reference to the first aspect, in some implementations of the first aspect, the second user plane function network element is configured to replace the first user plane function network element to transmit data of the communication; the second edge application server is configured to replace the first edge application server to transmit the data of the communication; the second application is configured to replace the first application to transmit the data of the communication; and the second tunnel is configured to replace the first tunnel to transmit the data of the communication.

Optionally, the first user plane function network element is a current network element for the communication of the terminal device. The second user plane function network element is selected to replace the current first user plane function network element to transmit the data of the communication, so that a communication path is changed from the first user plane function network element to the second user plane function network element, thereby ensuring data transmission.

Optionally, the first edge application server is a current network element for the communication of the terminal device. The second edge application server is selected to replace the current first edge application server to transmit the data of the communication, so that a communication path is changed from the first edge application server to the second edge application server, thereby ensuring data transmission.

Optionally, the first application is a current network element for the communication of the terminal device. The second application is selected to replace the current first application to transmit the data of the communication, so that a communication path is changed from the first application to the second application, thereby ensuring data transmission.

Optionally, the first tunnel of the interface is a current network element for the communication of the terminal device. The second tunnel is selected to replace the current first tunnel to transmit the data of the communication, so that a communication path is changed from the first tunnel to the second tunnel, thereby ensuring data transmission.

In a possible implementation, the communication includes communication between the terminal device and the first application, or communication between the terminal device and the second application. Based on the foregoing solution, a network element is reselected to replace the current network element to transmit the data of the communication, so that the communication path can be further optimized, stability and reliability of data transmission can be ensured, and communication quality can be improved.

With reference to the first aspect, in some implementations of the first aspect, the method further includes: sending a result of the operation to an application function network element, where when the first interface latency is the interface latency of the first user plane function network element for the first application, the result includes an identifier of the second application; when the first interface latency is the interface latency of the first user plane function network element for the first edge application server, the result includes an identifier of the second edge application server; or when the first interface latency is the interface latency of the first user plane function network element for the first tunnel, the result includes endpoint information of the second tunnel.

In a possible q q, when the first interface latency is the interface latency of the first user plane function network element for the first tunnel, the method further includes: sending the result of the operation to the first user plane function network element.

Based on the foregoing solution, the application function network element or the user plane function network element may learn of information about a reselected network element, so that the application function network element or the user plane function network element performs corresponding adjustment and optimization, to better adapt to a change of the communication path, thereby improving communication quality.

In some possible implementations, the first function network element receives a session modification request from a session management network element, where the session modification request is used to request to select the second user plane function network element.

Based on the foregoing solution, when interface latency is abnormal, a related session may be modified by reselecting a user plane function network element. To be specific, after the session is switched to the reselected user plane function network element, a session of an interface corresponding to an original user plane function network element is also modified to the reselected user plane function network element. This can quickly and effectively mitigate communication interruption caused by abnormal interface latency, reduce latency generated in a communication process, and improve communication efficiency.

With reference to the first aspect, in some implementations of the first aspect, receiving the first indication information from the first user plane function network element includes: receiving a first response message from the first user plane function network element, where the first response message is a response to a first subscription message, and the first response message includes the first indication information.

In some possible implementations, the method further includes: sending the first subscription message to the first user plane function network element, where the first subscription message includes an identifier of the first application, and the first subscription message is used to subscribe to the interface latency for the first application;
the first subscription message includes an identifier of the first edge application server, and the first subscription message is used to subscribe to the interface latency for the first edge application server; or
the first subscription message includes information about the first tunnel, and the first subscription message is used to subscribe to the interface latency for the first tunnel.

In some possible implementations, the first indication information includes at least one of the following: information indicating a status of the first interface latency, or information indicating a latency value of the first interface latency.

Based on the foregoing solution, interface latency of a corresponding granularity is subscribed to, so that the interface latency of the corresponding granularity can be learned in a timely manner and a reselection operation can be performed based on the interface latency. This can effectively resolve, in a timely manner, communication quality deterioration that may be caused by abnormal interface latency, and improve communication reliability.

According to a second aspect, a communication method is provided. The method may be performed by a core network element, or may be performed by a component (for example, a chip or a circuit) of the core network element. This is not limited herein. For ease of description, the following uses an example in which the method is performed by a first function network element for description.

The first function network element is a network element that manages a session between a user plane function network element and an edge application server, and the first function network element may be a service function SRF network element or a local session management function L-SMF network element.

In some possible implementations, the first function network element may alternatively be an intermediate session management function I-SMF network element.

The method includes: receiving second indication information from an application function network element, where the second indication information indicates a first edge application server load, and the first edge application server load includes at least one of the following: an edge application server load for a first edge application server, or an edge application server load for a first application, where the first edge application server is an edge application server selected for communication of a terminal device; and performing at least one of the following operations based on the first edge application server load: selecting a second edge application server, where the second edge application server is different from the first edge application server; or selecting a second application on the first edge application server, where the second application is different from the first application.

It should be understood that the first function network element may perceive the first edge application server load by receiving an edge application server load of a corresponding granularity (for example, the granularity may be a granularity of the first edge application server, or the granularity may be a granularity of the first application).

Based on the foregoing solution, the first function network element receives the edge application server load of the corresponding granularity, to perceive, in a timely manner, whether the edge application server load is abnormal, and perform a reselection operation when the edge application server load is abnormal, thereby effectively mitigating communication quality deterioration caused by excessive load on an edge application server load.

With reference to the second aspect, in some implementations of the second aspect, the second edge application server is configured to replace the first edge application server to transmit data of the communication; and the second application is configured to replace the first application to transmit the data of the communication.

Optionally, the first edge application server is a current network element for the communication of the terminal device. The second edge application server is selected to replace the current first edge application server to transmit the data of the communication, so that a communication path is changed from the first edge application server to the second edge application server, thereby ensuring data transmission.

Optionally, the first application is a current network element for the communication of the terminal device. The second application is selected to replace the current first application to transmit the data of the communication, so that a communication path is changed from the first application to the second application, thereby ensuring data transmission.

In some possible implementations, the communication includes communication between the terminal device and the first application, or communication between the terminal device and the second application. Based on the foregoing solution, a network element is reselected to replace the current network element to transmit the data of the communication, so that the communication path can be further optimized, stability and reliability of data transmission can be ensured, and communication quality can be improved.

With reference to the second aspect, in some implementations of the second aspect, the method further includes: sending a result of the operation to the application function network element, where when the first edge application server load is the edge application server load for the first edge application server, the result includes an identifier of the second edge application server; or when the first edge application server load is the edge application server load for the second application, the result includes an identifier of the second application.

Based on the foregoing solution, the application function network element may learn of information about a reselected network element, so that the application function network element performs corresponding adjustment and optimization, to better adapt to a change of the communication path, thereby improving communication quality.

With reference to the second aspect, in some implementations of the second aspect, receiving the second indication information from the application function network element includes: receiving a second response message from the application function network element, where the second response message is a response to a second subscription message, and the second response message includes the second indication information.

In some possible implementations, the method further includes: sending the second subscription message to the application function network element, where the second subscription message includes an identifier of the first edge application server, and the second subscription message is used to subscribe to the edge application server load for the first edge application server; or the second subscription message includes an identifier of the first application, and the second subscription message is used to subscribe to the edge application server load for the first application.

In some possible implementations, the second indication information includes at least one of the following: information indicating a level of the first edge application server load, or information indicating a percentage of the first edge application server load.

Based on the foregoing solution, an edge application server load of a corresponding granularity is subscribed to, so that the edge application server load of the corresponding granularity can be learned in a timely manner and a reselection operation can be performed based on the edge application server load. This can effectively resolve, in a timely manner, communication quality deterioration that may be caused by excessive load on an edge application server, and improve communication reliability.

With reference to the second aspect, in some implementations of the second aspect, the second indication information includes a session update request from the application function network element.

According to a third aspect, a communication method is provided. The method may be performed by a user plane function network element, or may be performed by a component (for example, a chip, a chip system, or a circuit) of the user plane function network element. This is not limited herein. For ease of description, the following uses the user plane function network element as an example for description.

The method includes: obtaining first interface latency, where the first interface latency includes at least one of the following: interface latency of a first user plane function network element for a first application, interface latency of a first user plane function network element for a first edge application server, or interface latency of a first user plane function network element for a first tunnel, where the first interface is between the first user plane function network element and the first edge application server that are selected for communication of a terminal device; and sending first indication information, where the first indication information indicates the first interface latency, where the first interface latency is used for at least one of the following operations: selecting a second user plane function network element, where the second user plane function network element is different from the first user plane function network element; selecting a second edge application server, where the second edge application server is different from the first edge application server; selecting a second application on the first edge application server, where the second application is different from the first application; or selecting a second tunnel of the first interface, where the second tunnel is different from the first tunnel.

Optionally, the first interface is a first N6 interface.

In some possible implementations, the first indication information includes at least one of the following: information indicating a status of the first interface latency, or information indicating a latency value of the first interface latency.

It should be understood that the user plane function network element may perceive interface latency between the first user plane function network element and the first edge application server by receiving interface latency of a corresponding granularity (for example, the granularity may be that of the first application, or the granularity may be that of the first edge application server, or the granularity may be that of the first tunnel).

Based on the foregoing solution, the user plane function network element obtains the interface latency of the corresponding granularity to perceive, in a timely manner, whether the interface latency is abnormal, and send the interface latency of the corresponding granularity to another network element, so that the another network element performs a reselection operation, thereby effectively mitigating communication quality deterioration caused by abnormal interface latency.

With reference to the third aspect, in some implementations of the third aspect, the second user plane function network element is configured to replace the first user plane function network element to transmit data of the communication; the second edge application server is configured to replace the first edge application server to transmit the data of the communication; the second application is configured to replace the first application to transmit the data of the communication; and the second tunnel is configured to replace the first tunnel to transmit the data of the communication.

In a possible implementation, the communication includes communication between the terminal device and the first application, or communication between the terminal device and the second application.

Optionally, the first user plane function network element is a current network element for the communication of the terminal device. The second user plane function network element is selected to replace the current first user plane function network element to transmit the data of the communication, so that a communication path is changed from the first user plane function network element to the second user plane function network element, thereby ensuring data transmission.

Optionally, the first edge application server is a current network element for the communication of the terminal device. The second edge application server is selected to replace the current first edge application server to transmit the data of the communication, so that a communication path is changed from the first edge application server to the second edge application server, thereby ensuring data transmission.

Optionally, the first application is a current network element for the communication of the terminal device. The second application is selected to replace the current first application to transmit the data of the communication, so that a communication path is changed from the first application to the second application, thereby ensuring data transmission.

Optionally, the first tunnel of the interface is a current network element for the communication of the terminal device. The second tunnel is selected to replace the current first tunnel to transmit the data of the communication, so that a communication path is changed from the first tunnel to the second tunnel, thereby ensuring data transmission.

Based on the foregoing solution, a network element is reselected to replace the current network element to transmit the data of the communication, so that the communication path can be further optimized, stability and reliability of data transmission can be ensured, and communication quality can be improved.

With reference to the third aspect, in some implementations of the third aspect, obtaining the first interface latency includes: sending a first detection request to the first edge application server; and receiving the first interface latency, where when the first interface latency is the interface latency of the first user plane function network element for the first application, the first detection request is used to request to detect the interface latency for the first application; when the first interface latency is the interface latency of the first user plane function network element for the first edge application server, the first detection request is used to request to detect the interface latency for the first edge application server; or when the first interface latency is the interface latency of the first user plane function network element for the first tunnel, the first detection request is used to request to detect the interface latency for the first tunnel.

Based on the foregoing solution, detection of interface latency of a corresponding granularity is implemented, so that the interface latency of the corresponding granularity can be learned in a timely manner, and another network element can use a corresponding reselection solution in a targeted manner based on the interface latency, thereby avoiding communication quality deterioration caused by abnormal interface latency.

With reference to the third aspect, in some implementations of the third aspect, sending the first indication information includes: receiving a first subscription message; and sending a first response message, where the first response message is a response to the first subscription message, and the first response message includes the first indication information, where the first subscription message includes an identifier of the first application, and the first subscription message is used to subscribe to the interface latency for the first application; the first subscription message includes an identifier of the first edge application server, and the first subscription message is used to subscribe to the interface latency for the first edge application server; or the first subscription message includes information about the first tunnel, and the first subscription message is used to subscribe to the interface latency for the first tunnel.

Based on the foregoing solution, subscription to interface latency of a corresponding granularity is received, so that detection of the interface latency of the corresponding granularity may be performed in a targeted manner, and the interface latency of the corresponding granularity is learned in a timely manner.

With reference to the third aspect, in some implementations of the third aspect, when the first interface latency is the interface latency of the first user plane function network element for the first tunnel, the method further includes: receiving endpoint information of the second tunnel; and updating an endpoint of the second tunnel.

Based on the foregoing solution, when interface latency is abnormal, endpoint information of a reselected interface tunnel is received, and an endpoint of the reselected interface tunnel is updated based on the endpoint information, so that the interface tunnel can be reselected in a timely manner, thereby effectively mitigating communication interruption caused by abnormal interface latency.

According to a fourth aspect, a communication method is provided. The method may be performed by an application function network element, or may be performed by a component (for example, a chip, a chip system, or a circuit) of the application function network element. This is not limited herein. For ease of description, the following uses the application function network element as an example for description.

The method includes: obtaining a first edge application server load, where the first edge application server load includes at least one of the following: an edge application server load for a first edge application server, or an edge application server load for a first application, where the first edge application server is an edge application server selected for communication of a terminal device; and sending second indication information, where the second indication information indicates the first edge application server load, where the first edge application server load is used for at least one of the following operations: selecting a second edge application server, where the second edge application server is different from the first edge application server; or selecting a second application on the first edge application server, where the second application is different from the first application.

It should be understood that the application function network element may perceive the first edge application server load by receiving an edge application server load of a corresponding granularity (for example, the granularity may be a granularity of the first edge application server, or the granularity may be a granularity of the first application).

Based on the foregoing solution, the application function network element obtains the edge application server load of the corresponding granularity to perceive, in a timely manner, whether the edge application server load is abnormal, and send the edge application server load of the corresponding granularity to another network element, so that the another network element performs a reselection operation, so that communication quality deterioration caused by excessive load on an edge application server can be effectively resolved.

With reference to the fourth aspect, in some implementations of the fourth aspect, the second edge application server is configured to replace the first edge application server to transmit data of the communication; and the second application is configured to replace the first application to transmit the data of the communication.

In some possible implementations, the communication includes communication between the terminal device and the first application, or communication between the terminal device and the second application.

Optionally, the first edge application server is a current network element for the communication of the terminal device. The second edge application server is selected to replace the current first edge application server to transmit the data of the communication, so that a communication path is changed from the first edge application server to the second edge application server, thereby ensuring data transmission.

Optionally, the first application is a current network element for the communication of the terminal device. The second application is selected to replace the current first application to transmit the data of the communication, so that a communication path is changed from the first application to the second application, thereby ensuring data transmission.

Based on the foregoing solution, a network element is reselected to replace the current network element to transmit the data of the communication, so that the communication path can be further optimized, stability and reliability of data transmission can be ensured, and communication quality can be improved.

With reference to the fourth aspect, in some implementations of the fourth aspect, obtaining the first edge application server load includes: sending a second detection request to the first edge application server; and receiving the first edge application server load, where when the first edge application server load is the edge application server load for the first edge application server, the second detection request is used to request to detect the edge application server load for the first edge application server; or when the first edge application server load is the edge application server load for the second application, the second detection request is used to request to detect the edge application server load for the second application.

Based on the foregoing solution, detection of an edge application server load of a corresponding granularity is implemented, so that the edge application server load of the corresponding granularity can be learned in a timely manner, and another network element can use a corresponding reselection solution in a targeted manner based on the edge application server load, thereby avoiding communication quality deterioration caused by excessive load on an edge application server.

With reference to the fourth aspect, in some implementations of the fourth aspect, sending the second indication information includes: receiving a second subscription message; and sending a second response message, where the second response message is a response to the second subscription message, and the second response message includes the second indication information, where the second subscription message includes an identifier of the first edge application server, and the second subscription message is used to subscribe to the edge application server load for the first edge application server; or the second subscription message includes an identifier of the second application, and the second subscription message is used to subscribe to the edge application server load for the second application.

Based on the foregoing solution, subscription to an edge application server load of a corresponding granularity is received, so that detection of the edge application server load of the corresponding granularity may be performed in a targeted manner, and the edge application server load of the corresponding granularity is learned in a timely manner.

With reference to the fourth aspect, in some implementations of the fourth aspect, the method further includes: receiving a result of the operation; and when the result includes the identifier of the second application, updating the second application; when the result includes an identifier of the second edge application server, updating the second edge application server; or when the result includes endpoint information of the second tunnel, updating the second tunnel.

Based on the foregoing solution, when the edge application server load is abnormal, a corresponding reselection operation can be implemented in a timely manner, thereby effectively mitigating communication interruption caused by excessive load on an edge application server.

According to a fifth aspect, a communication apparatus is provided. The apparatus is configured to perform any method according to the first aspect to the fourth aspect. Specifically, the apparatus may include a unit and/or a module configured to perform the method according to the first aspect to the fourth aspect, for example, a processing module and/or a communication module. In an implementation, the apparatus is a network device. For example, the apparatus is a first function network element, a user plane function network element, or an application function network element. When the apparatus is the network device, the communication module may be a transceiver or an input/output interface, and the processing module may be a processor.

In another implementation, the apparatus is a chip, a chip system, or a circuit used in the network device. When the apparatus is the chip, the chip system, or the circuit used in the communication device, the communication module may be an input/output interface, an interface circuit, an output circuit, an input circuit, a pin, a related circuit, or the like on the chip, the chip system, or the circuit. The processing module may be a processor, a processing circuit, a logic circuit, or the like.

In a possible case, the apparatus is a chip, a chip system, or a circuit in the first function network element. In this case, the apparatus may include a unit and/or a module configured to perform the method according to the first aspect or the second aspect, for example, a processing unit and/or a communication unit.

In another possible case, the apparatus is a chip, a chip system, or a circuit in the user plane function network element. In this case, the apparatus may include a unit and/or a module configured to perform the method according to the third aspect, for example, a processing module and/or a communication module.

In another possible case, the apparatus is a chip, a chip system, or a circuit in the application function network element. In this case, the apparatus may include a unit and/or a module configured to perform the method according to the fourth aspect, for example, a processing module and/or a communication module.

Optionally, the transceiver may be a transceiver circuit. Optionally, the input/output interface may be an input/output circuit.

According to a sixth aspect, a communication apparatus is provided. The apparatus includes: a memory, configured to store a program; and a processor, configured to execute the program stored in the memory. When the program stored in the memory is executed, the processor is configured to perform any method according to the first aspect to the fourth aspect.

According to a seventh aspect, this application provides a processor, configured to perform the methods provided in the foregoing aspects. In a process of performing these methods, a process of sending the information and a process of obtaining/receiving the information in the foregoing methods may be understood as a process of outputting the information by the processor and a process of receiving the inputted information by the processor. When outputting the information, the processor outputs the information to a transceiver, so that the transceiver transmits the information. After the information is outputted by the processor, other processing may further need to be performed on the information before the information arrives at the transceiver. Similarly, when the processor receives the inputted information, the transceiver obtains/receives the information, and inputs the information into the processor. Furthermore, after the transceiver receives the information, other processing may need to be performed on the information before the information is inputted into the processor.

According to the foregoing principle, for example, receiving a request message as mentioned in the foregoing methods may be understood as receiving inputted information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to an eighth aspect, a computer-readable storage medium is provided. The computer-readable medium stores program code to be executed by a device, and the program code is used to perform any method according to the first aspect to the fourth aspect.

According to a ninth aspect, a computer program product including instructions is provided. When the computer program product is run on a computer, the computer is caused to perform any method according to the first aspect to the fourth aspect.

According to a tenth aspect, a chip or a chip system is provided. The chip or the chip system includes a processor and a communication interface. The processor reads, through the communication interface, instructions stored in a memory, to perform any method according to the first aspect to the fourth aspect.

Optionally, in an implementation, the chip or the chip system may further include the memory. The memory stores the instructions, and the processor is configured to execute the instructions stored in the memory. When the instructions are executed, the processor is configured to perform any method according to the first aspect to the fourth aspect.

According to an eleventh aspect, a communication system is provided, including one or more of the first function network element, the user plane function network element, and the application function network element.

### BRIEF DESCRIPTION OF DRAWINGS

FIG. 1a and FIG. 1b are diagrams of a network architecture according to an embodiment of this application;
FIG. 2a and FIG. 2b are diagrams of another network architecture according to an embodiment of this application;
FIG. 3 is a diagram of an edge computing scenario according to an embodiment of this application;
FIG. 4 is a diagram of a communication method 200 according to an embodiment of this application;
FIG. 5 is a diagram of a communication method 300 according to an embodiment of this application;
FIG. 6a and FIG. 6b are a schematic flowchart of another communication method 400 according to an embodiment of this application;
FIG. 7a and FIG. 7b are a schematic flowchart of another communication method 500 according to an embodiment of this application;
FIG. 8a, FIG. 8b and FIG. 8c are a schematic flowchart of another communication method 600 according to an embodiment of this application;
FIG. 9a and FIG. 9b are a schematic flowchart of another communication method 700 according to an embodiment of this application;
FIG. 10 is a block diagram of a communication apparatus 10 according to an embodiment of this application; and
FIG. 11 is a block diagram of another communication apparatus 20 according to an embodiment of this application.

### DESCRIPTION OF EMBODIMENTS

The following describes technical solutions of this application with reference to accompanying drawings.

The technical solutions in embodiments of this application may be applied to various communication systems, for example, a 5th generation (5th generation, 5G) system, a new radio (new radio, NR) system, or a long term evolution (long term evolution, LTE) system. The technical solutions provided in this application may be further applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

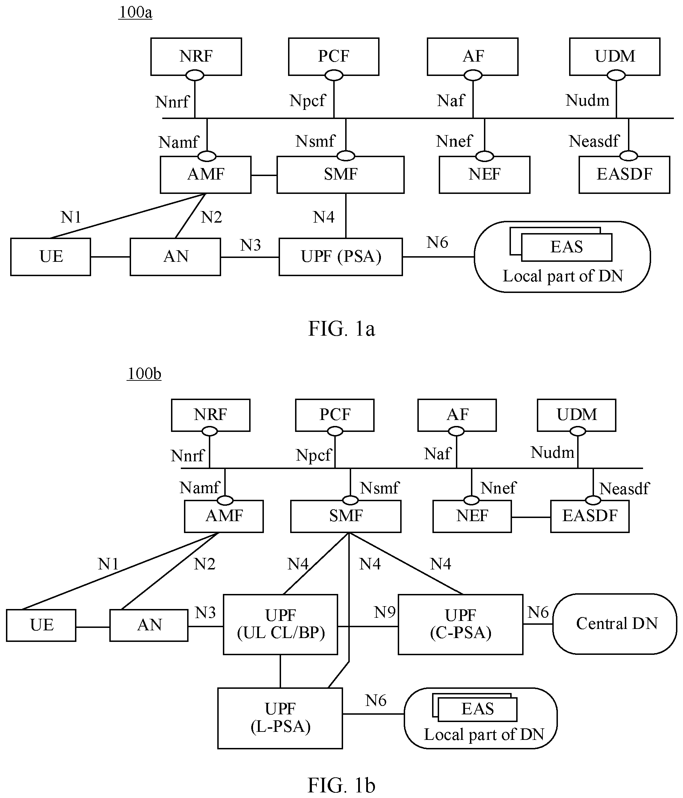

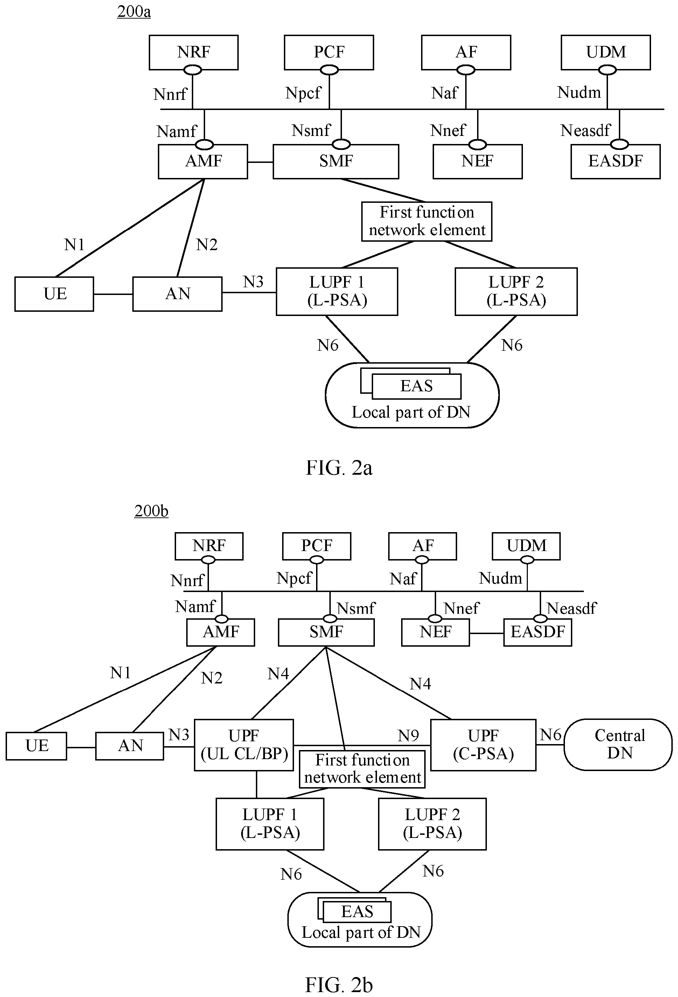

For ease of understanding of embodiments of this application, a communication system to which an embodiment of this application is applicable is first briefly described with reference to FIG. 1a and FIG. 1b and FIG. 2a and FIG. 2b.

As an example for description, FIG. 1a and FIG. 1b are diagrams of an architecture of a 5G system 100 to which an embodiment of this application is applicable. As shown in FIG. 1a and FIG. 1b, the network architecture may include but is not limited to the following network elements (or referred to as function network elements, function entities, nodes, devices, or the like):

User equipment (user equipment, UE), a (radio) access network ((radio) access network, (R)AN) device, a user plane function (user plane function, UPF) network element, an edge application server (edge application server, EAS), an access and mobility management function (access and mobility management function, AMF) network element, a session management function (session management function, SMF) network element, a network exposure function (network exposure function, NEF) network element, an EASDF network element, a network repository function (NF repository function, NRF) network element, a policy control function (policy control function, PCF) network element, an application function (application function, AF) network element, a unified data management (unified data management, UDM) network element, and the like.

The following briefly describes the network elements shown in FIG. 1a.
1. User equipment: may be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides voice/data connectivity for a user, for example, a handheld device or a vehicle-mounted device that has a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (internet of things, IoT) system. IoT is an important part in future development of information technologies. A main technical feature of the IoT is to connect things to a network by using a communication technology, to implement an intelligent network for human-machine interconnection and thing-thing interconnection. An IoT technology can achieve massive connections, deep coverage, and terminal power saving by using, for example, a narrow band (narrow band, NB) technology.

In addition, the terminal device may further include an intelligent printer, a train detector, and the like, and main functions include collecting data (which is a function of some terminal devices), receiving control information and downlink data of a network device, sending an electromagnetic wave, and transmitting uplink data to the network device.

It should be understood that the user equipment may be any device that can access a network. The terminal device and an access network device may communicate with each other by using an air interface technology.

Optionally, the user equipment may be configured to serve as a base station. For example, the user equipment may serve as a scheduling entity, and provide a sidelink signal between user equipment in V2X, D2D, or the like. For example, the cellular phone and an automobile communicate with each other via a sidelink signal. The cellular phone communicates with a smart home device without relaying a communication signal via a base station.

2. (Radio) access network device: is used to provide a network access function for authorized user equipment in a specific area, and can use transmission tunnels of different quality of service based on a level of the user equipment, a service requirement, and the like.

The (R)AN can manage radio resources and provide an access service for the user equipment, to forward a control signal and user equipment data between the user equipment and a core network. The (R)AN may also be understood as a base station in a conventional network.

For example, the access network device in embodiments of this application may be any communication device that has a wireless transceiver function and that is configured to communicate with the user equipment. The access network device includes but is not limited to an evolved NodeB (evolved NodeB, eNB), a gNB or a transmission point (TRP or TP) in a 5G system, for example, NR, or one antenna panel or a group of antenna panels (including a plurality of antenna panels) of a base station in the 5G system, or may be a network node that forms the gNB or the transmission point, for example, a baseband unit (BBU) or a distributed unit (distributed unit, DU).

In some deployments, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in a core network (core network, CN). This is not limited in this application.

3. User plane function network element: The user plane function network element mainly includes the following functions: user plane related functions such as data packet routing and transmission, packet detection, service usage reporting, quality of service (Quality of Service, QoS) processing, lawful interception, uplink packet detection, and downlink packet storage.

For example, UPFs may be classified into a protocol data unit session anchor UPF (protocol data unit session anchor UPF, PSA UPF) and an uplink classifier functionality UPF (uplink classifier functionality UPF, ULCL UPF).

The UPF shown in FIG. 1a is a PSA UPF. The PSA UPF is a UPF that supports a function of a PDU session anchor. The UE is connected to the AMF through an N1 interface. The AN is connected to the AMF through an N2 interface, and is connected to the PSA UPF through an N3 interface. The PSA UPF is connected to the SMF through an N4 interface. The PSA UPF is connected to the EAS through an N6 interface.

In the following descriptions, for brevity of description, the PSA UPF may be referred to as a PSA for short, and the ULCL UPF may be referred to as a ULCL for short.

The user plane function network element is referred to as a user plane function network element in a 5G architecture. In the future communication system, the user plane function network element may still be the UPF network element, or may have another name. This is not limited in this application.

4. Edge application service: The EAS is an edge application service deployed in a data network (data network, DN), usually deployed on an edge hosting environment (edge hosting environment, EHE) in the DN. The EHE may be considered as a multi-access edge computing (multi-access edge computing, MEC) environment, and the MEC environment is controlled by an operator or a third party.

The edge application server may also be referred to as an "application instance", and may be specifically an instance (instance) of a server application (for example, social media software, augmented reality (augmented reality, AR), or virtual reality (virtual reality, VR)) deployed in an edge data network. An application (or referred to as a service) may be deployed on one or more EASs in one or more DNs. EASs running in different DNs may be different EASs of one application. The EASs may share one domain name, or may use a domain name different from that of an application deployed on a cloud. The domain name may be a fully qualified domain name (fully qualified domain name, FQDN), and may use an anycast IP address, or may use different IP addresses.

It may be understood that the EAS may also be referred to as an edge application (server), an application instance, an edge application instance, a multi-access edge computing application (server), an EAS function, or the like.

The DN may be a local part of DN (local part of DN). The local part of DN includes an edge enabler server (edge enabler server, EES) and a plurality of EASs. Each local part of DN has a specific service range.

5. Access and mobility management function network element: The mobility management function network element mainly includes the following functions: access and mobility-related functions such as connection management, mobility management, registration management, access authentication and authorization, reachability management, and security context management.

The access and mobility management function network element is referred to as an access and mobility management function network element in the 5G architecture. In the future communication system, the access and mobility management function network element may still be the AMF network element, or may have another name. This is not limited in this application.

6. Session management function network element: is mainly configured for session management, assignment and management of an internet protocol (internet protocol, IP) address of a terminal device, selection of a manageable user plane function, termination of policy control and charging function interfaces, downlink data notification, and the like. The session management network element may be a network element that provides a service for a session of the UE.

In the future communication system, the session management function network element may still be the SMF network element, or may have another name. This is not limited in this application.
7. Network exposure function network element: may be understood as a name of a capability exposure network element in the 5G architecture. The capability exposure network element mainly includes the following functions: securely opening a service and a capability that are provided by a 3GPP network function, such as internally opening or opening to a third party; and converting or translating information exchanged with the AF and information exchanged with an internal network function, for example, an AF service identifier and internal 5G core network information such as a data network name (data network name, DNN), and single network slice selection assistance information (single network slice selection assistance information, S-NSSAI).
8. EAS discovery function network element: is mainly responsible for discovering the EAS, and includes functions such as registering with the NRF for discovery and selection, processing a DNS message based on an indication of the SMF (for example, receiving a DNS message processing rule sent by the SMF, sending the DNS message to a local DNS server or a central DNS server, adding an ECS option to a DNS query message, exchanging a DNS message sent by the UE, and notifying the SMF of EASDF-related information), and terminating DNS security.
9. Network repository function network element: may be understood as a name of the network repository function network element in the 5G architecture. The network repository function network element mainly includes the following functions: a service discovery function, and maintaining NF text of available network function (network function, NF) instances along with services that are supported by the NF instances.
10. Policy control function network element: is a unified policy framework for guiding network behavior, and provides policy rule information and the like for a control plane function network element (for example, the AMF network element and the SMF network element).

In the future communication system, the policy control function network element may still be the PCF network element, or may have another name. This is not limited in this application.

11. Application function network element: is configured to perform application-affected data routing and provide application layer information, and may interact with a policy framework by accessing the network exposure function network element, or directly interact with the policy framework to perform policy decision request control, or the like.

In the future communication system, the application function network element may still be the AF network element, or may have another name. This is not limited in this application.

12. Unified data management network element: may be understood as a name of the unified data management network element in the 5G architecture. The unified data management network element mainly includes the following functions: unified data management, authentication credential processing in a mechanism supporting 3GPP authentication and key agreement, user identity processing, access authorization, registration and mobility management, subscription management, short message management, and the like.

In the future communication system, the unified data management network element may still be the UDM network element, or may have another name. This is not limited in this application.

As an example for description, FIG. 1b is a diagram of an architecture of a 5G system 100b to which an embodiment of this application is applicable. A difference between the system 100b shown in FIG. 1b and the system 100a shown in FIG. 1a lies in that the 5G system in the system 100a shown in FIG. 1a provides access to the EAS without the ULCL/BP, while the 5G system in the system 100b shown in FIG. 1b provides access to the EAS via the ULCL/BP. As shown in FIG. 1b, the network architecture may include but is not limited to the following network elements (or referred to as function network elements, function entities, nodes, devices, or the like):

UE, a (R)AN, a UPF, an EAS, a central DN, an AMF network element, an SMF network element, an NEF network element, an EASDF network element, an NRF network element, a PCF network element, an AF network element, a UDM network element, and the like.

The network elements included in FIG. 1b and the connections between the network elements are similar to those in FIG. 1a, and details similar to those in FIG. 1a are not described again, and differences are as follows.
1. The UPF shown in FIG. 1b includes a ULCL UPF (or referred to as a branching point UPF (branching point UPF, BP UPF)), a local PSA UPF (local PSA UPF, L-PSA UPF), and a central PSA UPF (central PSA UPF, C-PSA UPF).

The UPF shown in FIG. 1a includes a ULCL UPF (or referred to as a branching point UPF (branching point UPF, BP UPF)), a local PSA UPF (local PSA UPF, L-PSA UPF), and a central PSA UPF (central PSA UPF, C-PSA UPF).

The ULCL UPF is a UPF having an uplink offloading function. The UE is connected to the AMF through the N1 interface. The AN is connected to the AMF through the N2 interface and is connected to the ULCL UPF through the N3 interface. The ULCL UPF is connected to the SMF through the N4 interface and is connected to the PSA UPF through an N9 interface. The SMF is connected to the PSA UPF through the N4 interface. The C-PSA UPF is connected to the central DN through an N6 interface. The L-PSA UPF is connected to the EAS through the N6 interface.

In the following descriptions, for brevity of description, the L-PSA UPF may be referred to as an LUPF for short.

2. In addition to the EAS, the architecture shown in FIG. 1b further includes the central DN.

As an example for description, FIG. 2a and FIG. 2b are diagrams of an architecture of a communication system 200 according to an embodiment of this application. Network elements included in FIG. 2a and FIG. 2b and connections between the network elements are similar to those in FIG. 1a and FIG. 1b. The network elements included in FIG. 2a and the connections between the network elements are similar to those in FIG. 1a. The network elements included in FIG. 2b and the connections between the network elements are similar to those in FIG. 1b.

Details similar to those in FIG. 1a and FIG. 1b are not described again, and differences are as follows.
1. In a system 200a or 200b shown in FIG. 2a and FIG. 2b, a first function network element is newly added between a session management function network element and a local user plane function network element, and the first function network element is configured to manage data transmission between the LUPF and an EAS.

Optionally, the first function network element may be a service function (service function, SRF) network element or a local session management function (local session management function, L-SMF) network element.

Optionally, the first function network element may alternatively be an intermediate session management function (intermediate session management function, I-SMF) network element.

It should be understood that the intermediate session management function network element is a non-newly added network element between the session management function network element and the local user plane function network element in the system 200a or 200b.

2. The architecture shown in FIG. 2a and FIG. 2b may include a plurality of local PSA UPFs, for example, an L-PSA UPF 1 and an L-PSA UPF 2. For ease of description, the L-PSA UPF 1 may be referred to as an LUPF 1, and the L-PSA UPF 2 may be referred to as an LUPF 2.

The LUPF is connected to the EAS through the N6 interface, and the LUPF 1 is connected to the LUPF 2 through the N9 interface.

It may be understood that the foregoing network elements or function network elements may be network elements in a hardware device, software functions running on dedicated hardware, or virtualization functions instantiated on a platform (for example, a cloud platform).

In the network architecture shown in FIG. 1a and FIG. 1b or FIG. 2a and FIG. 2b, the network elements may communicate with each other through the interfaces shown in the figure, and some interfaces may be implemented in a manner of non-service-oriented interfaces. As shown in FIG. 1a and FIG. 1b or FIG. 2a and FIG. 2b, the UE and the AMF may interact with each other through the N1 interface, and an interaction message may be referred to as, for example, an N1 message (N1 Message). The RAN and the AMF may interact with each other through the N2 interface, and the N2 interface may be for sending a non-access stratum (non-access stratum, NAS) message and the like. The RAN and the UPF may interact with each other through the N3 interface, and the N3 interface may be for transmitting user plane data and the like. The SMF and the UPF may interact with each other through the N4 interface, and the N4 interface may be for transmitting information such as tunnel identifier information of an N3 connection, data buffering indication information, and a downlink data notification message. The UPF and the EAS may interact with each other through the N6 interface, and the N6 interface may be for transmitting user plane data and the like. The UPF and the UPF may interact with each other through the N9 interface, and the N9 interface may be for transmitting a user plane packet and the like.

In embodiments of this application, unless otherwise specified, a first interface is the N6 interface. In other words, the first interface is between a user plane function network element and an edge application server that are selected for communication of a terminal device.

In addition, the network elements of the control plane function in FIG. 1a and FIG. 1b or FIG. 2a and FIG. 2b may alternatively communicate with each other through a service-oriented interface. For example, the AMF accesses a service-oriented architecture through an Namf interface, and provides a corresponding service. The SMF accesses the service-oriented architecture through an Nsmf interface, and provides a corresponding service. Similarly, the NRF, the PCF, and the AF access the service-oriented architecture through respective corresponding interfaces, and provide corresponding services. Details are not described herein again. Relationships between other interfaces and the network elements are shown in FIG. 1a and FIG. 1b or FIG. 2a and FIG. 2b. For brevity, details are not described herein.

It should be understood that the network architecture to which embodiments of this application can be applied is merely an example for description, and the network architecture to which embodiments of this application are applied is not limited thereto. Embodiments of this application are applied to any network architecture that can implement functions of the foregoing network elements.

It should be further understood that the UPF, the AF, and the SMF shown in FIG. 1a and FIG. 1b and FIG. 2a and FIG. 2b, the first function network element shown in FIG. 2a and FIG. 2b, and the like may be understood as network elements configured to implement different functions. For example, the network elements may be combined into a network slice as required. These network elements may be independent devices, or may be integrated into a same device to implement different functions, or may be network elements in a hardware device, or may be software functions running on dedicated hardware, or may be instantiated virtualization functions on a platform (for example, a cloud platform). Specific forms of the network elements are not limited in this application.

It should be further understood that the foregoing names are defined merely for ease of distinguishing between different functions, and should not constitute any limitation on this application. This application does not exclude a possibility that another name is used in the 5G network and another future network. For example, in a 6G network, a part or all of the foregoing network elements may still use terms in 5G, or may use other names.

It should be further understood that, names of interfaces between the network elements in FIG. 1a and FIG. 1b and FIG. 2a and FIG. 2b are merely examples. During specific implementation, the names of the interfaces may be other names. This is not specifically limited in this application. In addition, names of messages (or signaling) transmitted between the foregoing network elements are merely examples, and do not constitute any limitation on functions of the messages.

To facilitate understanding of the technical solutions in embodiments of this application, before the solutions in embodiments of this application are described based on the 5G architecture, some terms or concepts in 5G that may be used in embodiments of this application are first briefly described.

### 1. 5G architecture

An evolved packet system (evolved packet system, EPS) defined in the 3rd generation partnership project (3rd generation partnership project, 3GPP) includes a 5G network architecture based on a service-oriented interface or a 5G network architecture based on a point-to-point interface. A 5G network may be divided into three parts: UE, a DN, and an operator network.

The operator network may include one or more of the network elements shown in FIG. 1a and FIG. 1b other than the UE and the DN, or may further include another network element. A 5G network structure is not limited in this application and reference may be made to descriptions in a current related technology.

### 2. Edge computing

Rapid development of mobile communication promotes emergence of various new services. In addition to conventional mobile broadband and internet of things, mobile communication gives rise to many new application fields, such as an augmented reality (augmented reality, AR) technology, a virtual reality (virtual reality, VR) technology, an internet of vehicles technology, industrial control, and IoT. In addition, higher requirements are imposed on performance such as a network bandwidth and latency. Consequently, a network load is further increased.

In LTE, a conventional centralized anchor deployment mode is increasingly difficult to support a fast-growing mobile service traffic model. In a network in which anchor gateways are deployed in a centralized manner, increased traffic is finally concentrated in a gateway and a core machine room, and this imposes increasingly high requirements on a backhaul network bandwidth, machine room throughput, and a gateway specification. In addition, a long-distance backhaul network from an access network to the anchor gateway and a complex transmission environment cause significant latency and jitter of user packet transmission.

Based on the preceding situation, the industry proposes edge computing (edge computing, EC). Edge computing implements distributed local processing of service traffic by moving a user plane network element and a service processing capability to a network edge. This avoids excessive centralization of traffic, and greatly reduces specification requirements on a core machine room and a centralized gateway. In addition, edge computing shortens a backhaul network distance, reduces end-to-end transmission latency and jitter of a user packet, and enables deployment of ultra-low latency services.

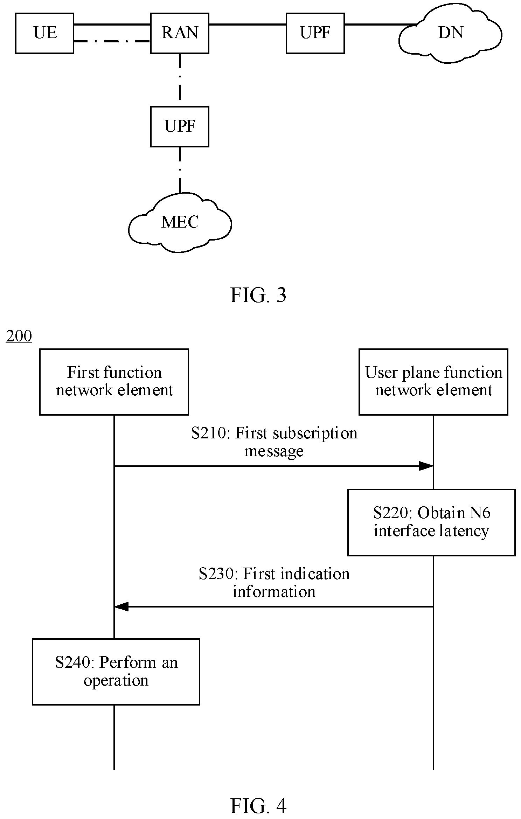

FIG. 3 is a diagram of an edge computing scenario. Compared with a DN, an edge computing platform is deployed at a localized UPF (that is, a local UPF), while the DN is deployed at a remote UPF. Compared with a path (as shown by a solid line) for UE to access the DN, a path (as shown by a dash-dot line) for the UE to access the edge computing platform is greatly shortened. Therefore, the edge computing technology can provide a user with low-latency and high-bandwidth services.

A user plane function UPF network element is used as a connection anchor between a 5G network and multi-access edge computing MEC. All core network data needs to be forwarded by the UPF before being transmitted to an external network. However, in an MEC deployment scenario, one or more EASs deployed at an edge of the external network may provide services for some application services. Therefore, the core network data may be forwarded to the EAS through the UPF to provide a service for the user. During communication data transmission, if a network is abnormal, service communication cannot be guaranteed. Therefore, how to detect network abnormality and how to restore network communication after the network abnormality to ensure that a related device obtains service guarantees are problems that need to be resolved.

The foregoing describes the scenario to which embodiments of this application can be applied with reference to FIG. 1a and FIG. 1b and FIG. 2a and FIG. 2b, and further briefly describes the basic concepts in this application. The following describes in detail a communication method provided in this application with reference to the accompanying drawings.

For ease of understanding of embodiments of this application, the following several points are described.

First, in this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in many manners. For example, but not limited to, the to-be-enabled information, such as the to-be-enabled information itself or an index of the to-be-enabled information, may be directly enabled. Alternatively, the to-be-enabled information may be indirectly enabled by enabling other information, where there is an association relationship between the other information and the to-be-enabled information. Alternatively, only a part of the to-be-enabled information may be enabled, and remaining parts of the to-be-enabled information are known or agreed in advance. For example, specific information may be enabled through a pre-agreed (for example, specified in a protocol) sequence of all information, to reduce enabling overheads to some extent. In addition, a common part of all information may be identified and enabled in a unified manner, to reduce enabling overheads caused by enabling the same information separately.

Second, various numeric numbers such as first and second (for example, "#1" and "#2") shown in this application are merely for ease of description, and are used to distinguish between objects, but are not intended to limit the scope of embodiments of this application. For example, the numeric numbers are used to distinguish different network elements, but are not used to describe a particular order or sequence. It should be understood that the objects described in such a way are interchangeable in an appropriate circumstance, so that a solution other than embodiments of this application can be described.

Third, the terms "include", "have" and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to such a process, method, product, or device.

Fourth, in this application, the term "preconfiguration" may include "predefinition", for example, "definition in a protocol". "Predefinition" may be implemented by prestoring corresponding code or a corresponding table in a device (including, for example, network elements), or may be implemented in another manner of indicating related information. A specific implementation of the "predefinition" is not limited in this application.

Fifth, "save" in embodiments of this application may be storage in one or more memories. The one or more memories may be separately disposed, or may be integrated into an encoder or a decoder, a processor, or a communication apparatus. Alternatively, the one or more memories may be partially disposed separately, and partially integrated into a decoder, a processor, or a communication apparatus. A type of the memory may be a storage medium in any form. This is not limited in this application.

Sixth, "protocols" in embodiments of this application may be standard protocols in the communication field, for example, may include a 5G protocol, a new radio (new radio, NR) protocol, and a related protocol applied to a future communication system. This is not limited in this application.

A specific structure of an execution body of the method provided in embodiments of this application is not particularly limited in the following embodiments provided that communication can be performed according to the method provided in embodiments of this application by running a program that records code of the method provided in embodiments of this application. For example, the method provided in embodiments of this application may be performed by a core network device, or a functional module that is in the core network device and that can invoke and execute the program.

The following uses interaction between network elements as an example to describe in detail the communication method provided in embodiments of this application. It should be understood that, for terms and steps in embodiments of this application, reference may be made to each other.

In the following, for differentiation, in this application, a ULCL UPF and an L-PSA UPF that are deployed in a network are respectively referred to as a ULCL and an LUPF.

FIG. 4 is a diagram of a communication method 200 according to an embodiment of this application. The method 200 shown in FIG. 4 may be applied to the network architecture shown in FIG. 2a and FIG. 2b, and the method 200 may be performed by the first function network element shown in FIG. 2a and FIG. 2b.

S210: The first function network element sends a first subscription message to a user plane function network element, where the first subscription message is used to subscribe to N6 interface latency, and correspondingly, the user plane function network element receives the first subscription message.

The first function network element is a network element that manages a session between the user plane function network element and an edge application server, and the first function network element includes a service function SRF network element and a local session management function L-SMF network element.

In some possible implementations, the first function network element may alternatively be an intermediate session management function I-SMF network element.

Optionally, the user plane function network element belongs to an LUPF set, and the LUPF set includes at least a first local user plane function network element LUPF #1 and a second local user plane function network element LUPF #2. For ease of description, the LUPF set may be referred to as LUPFs. It should be understood that a quantity of LUPFs in the LUPF set is not limited in this application.

For ease of description, the following uses an example in which the user plane function network element is an LUPF. However, this application is not limited thereto.

In a possible implementation, the first function network element sends the first subscription message for the N6 interface latency to each LUPF in the LUPFs.

Optionally, the first subscription message includes an N6 interface latency reporting criterion, and the N6 interface latency reporting criterion is used to report a status of the N6 interface latency, for example, abnormality of the N6 interface latency, or the N6 interface latency criterion is used to report a value of the N6 interface latency at a specific periodicity.

It should be understood that the first subscription message may be used to subscribe to interface latency of a corresponding granularity based on some granularities (for example, the granularity may be an APPid, an identifier of an edge application server, or endpoint information of an interface tunnel).

Optionally, the first subscription message includes an application identifier (APPid), and the first subscription message is used to subscribe to N6 interface latency for an application.

Optionally, the first subscription message includes an identifier of an edge application server, and the first subscription message is used to subscribe to N6 interface latency for the edge application server.

Optionally, the first subscription message includes endpoint information of an N6 interface tunnel, and the first subscription message is used to subscribe to N6 interface latency for the tunnel.

It should be understood that the identifier of the edge application server in this application may be user plane information used to determine the EAS. Specifically, the information may be information about an application-side endpoint of a user plane path, for example, a potential location (which may be represented by a DNAI) of an application. The identifier of the edge application server may further include latency corresponding to the DNAI, and the like.

For ease of description, in this embodiment of this application, an example in which the identifier of the edge application server includes the DNAI is used for description. However, it should be understood that the identifier of the edge application server may be the DNAI. This is not limited in this application.

It should be understood that, in some optional implementations, a subscription message may alternatively be sent by another network element, for example, an SMF, to the user plane function network element.

S220: The user plane function network element obtains the N6 interface latency.

Specifically, the LUPFs receive the first subscription message for the N6 interface latency from the first function network element, and initiate N6 interface latency detection to the EAS. Correspondingly, the EAS feeds back the detected N6 interface latency to the LUPFs.

Optionally, the N6 interface latency includes a status of the N6 interface latency, for example, normality of the N6 interface latency, or abnormality of the N6 interface latency.

Optionally, the N6 interface latency further includes a latency value of the N6 interface latency.

S230: The user plane function network element sends first indication information to the first function network element. The first indication information indicates the N6 interface latency.

Specifically, the first indication information includes at least one of the following: information indicating the status of the N6 interface latency, or information indicating the latency value of the N6 interface latency.

Optionally, the LUPFs may send the first indication information to the first function network element when a trigger condition is satisfied.

For example, the trigger condition may be abnormality of the N6 interface latency.

For example, the abnormality of the N6 interface latency is that data transmission latency on the N6 interface does not satisfy a user plane latency requirement. The user plane latency requirement herein indicates maximum latency allowed for user plane transmission, or the user plane latency requirement indicates a threshold of user plane transmission latency. It should be understood that the user plane latency requirement (or the threshold) herein may be preconfigured by an application function network element for the first function network element before S310, or the user plane latency requirement (or the threshold) herein may be preconfigured by the application function network element for a session management network element corresponding to all terminal devices in a terminal set before S310.

Correspondingly, the first function network element receives the first indication information from the LUPFs, where the first indication information indicates the N6 interface latency, and the first function network element performs a reselection operation based on the N6 interface latency. Alternatively, the first indication information indicates the first function network element to reselect a user plane function network element, an edge application server, an application, or an N6 interface tunnel for the terminal device.

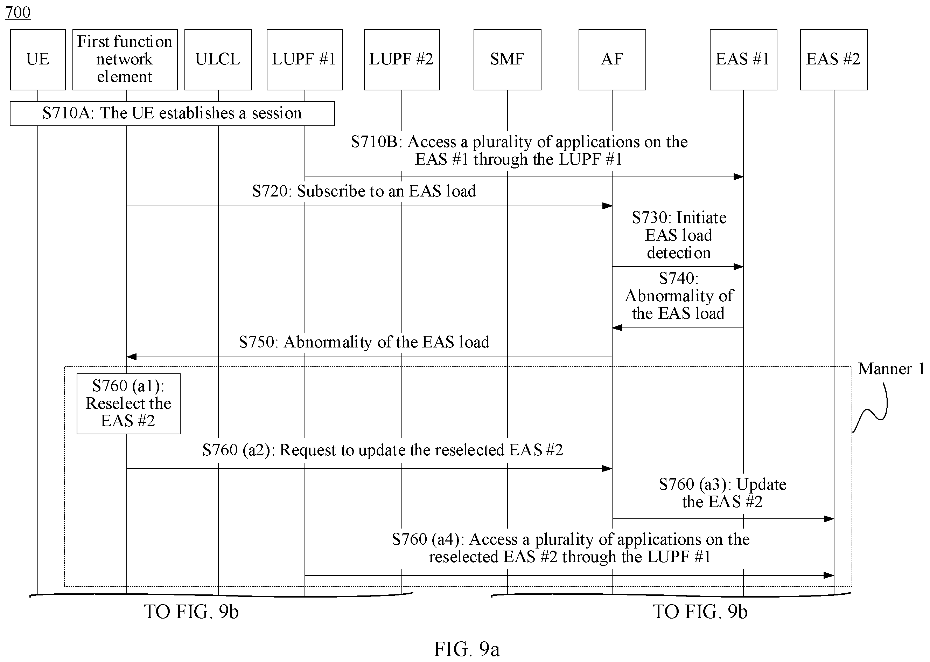

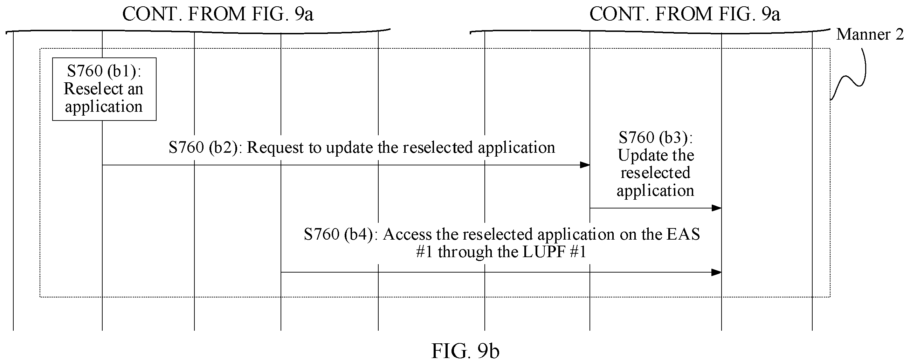

It should be understood that in the foregoing solution, when the trigger condition (for example, the abnormality of the N6 interface latency) is satisfied, the user plane function network element triggers the first function network element to perform the operation. However, alternatively, in some possible implementations, a session management function SMF network element may trigger the foregoing procedure. For example, the SMF sends a session modification request to the first function network element based on a locally configured a trustlist of applications that need consideration of the N6 interface latency. The session modification request indicates the first function network element to reselect a user plane function network element. For detailed descriptions, refer to FIG. 9a and FIG. 9b. Details are not described herein again.

S240: The first function network element performs the operation, where the operation includes at least one of the following: reselecting a user plane function network element, reselecting an edge application server, reselecting an application, or reselecting an N6 interface tunnel.

It should be understood that "reselect" herein may also be referred to as "switch" and the like. For example, "reselect a user plane function network element" may also be referred to as "switch a user plane function network element". For another example, "reselect an edge application server" may also be referred to as "switch an edge application server". For another example, "reselect an application" may also be referred to as "switch an application". For another example, "reselect an N6 interface tunnel" may also be referred to as "switch an N6 interface tunnel".

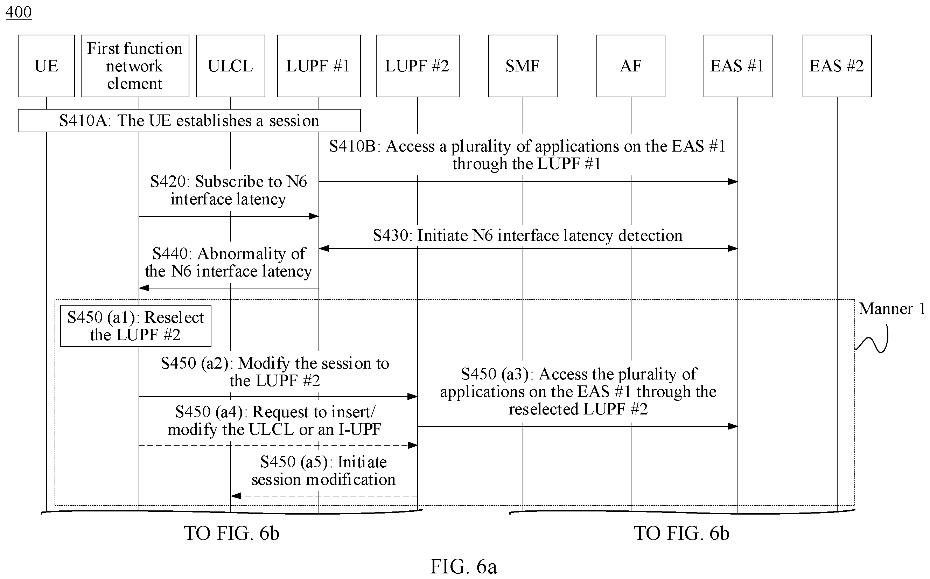

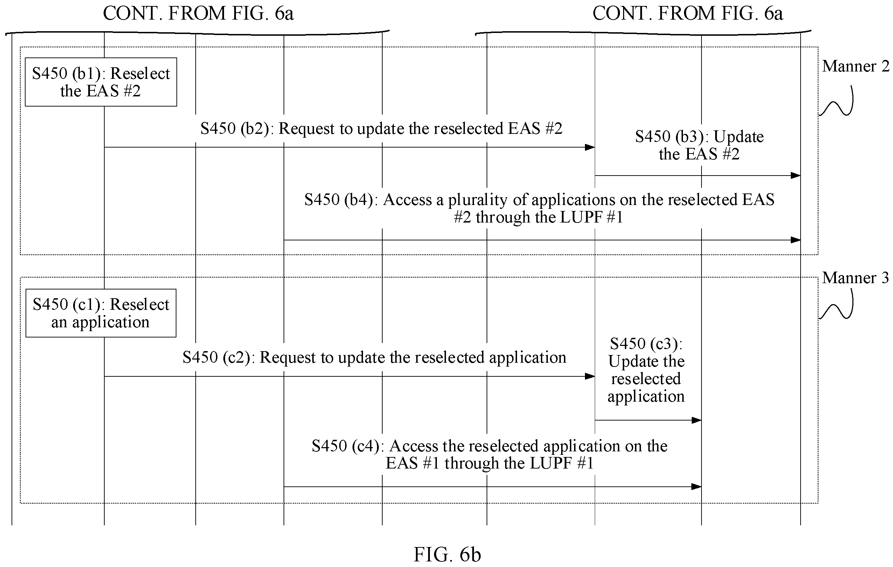

That is, a reselected user plane function network element is different from a current user plane function network element. Correspondingly, a reselected edge application server is different from a current edge application server, a reselected application is different from a current application, and a reselected N6 interface tunnel is different from a current N6 interface tunnel. Some specific implementations of this application are described below with reference to FIG. 6a and FIG. 6b to FIG. 9a and FIG. 9b.

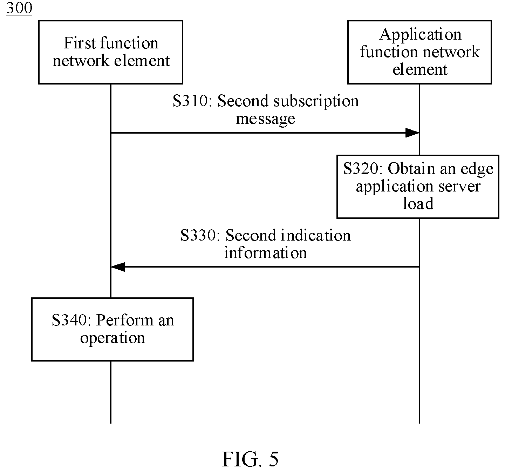

FIG. 5 is a diagram of another communication method according to an embodiment of this application. The method 300 shown in FIG. 5 may be applied to the network architecture shown in FIG. 2a and FIG. 2b, and the method 300 may be performed by the first function network element shown in FIG. 2a and FIG. 2b.

S310: The first function network element sends a second subscription message to an application function network element. The second subscription message is used to subscribe to an edge application server load. Correspondingly, the AF receives the second subscription message.

The first function network element is a network element that manages a session between a user plane function network element and an edge application server, and the first function network element includes a service function SRF network element and a local session management function L-SMF network element.

In some possible implementations, the first function network element may alternatively be an intermediate session management function I-SMF network element.

Optionally, the second subscription message includes an EAS load reporting criterion, where the EAS load reporting criterion is used to report an EAS load status, for example, abnormality of the EAS load, or the EAS load reporting criterion is used to report a level or a percentage of the EAS load at a specific periodicity.

It should be understood that the second subscription message may be used to subscribe to an edge application server load of a corresponding granularity based on some granularities (for example, the granularity may be an APPid or an identifier of an edge application server).

Optionally, the second subscription message includes an identifier of an edge application server, and the second subscription message is used to subscribe to an edge application server load of the edge application server corresponding to the identifier of the edge application server.

Optionally, the second subscription message includes an application identifier (Appid), and the second subscription message is used to subscribe to an edge application server load of an application corresponding to the application identifier. It should be understood that the identifier of the edge application server in this application may be user plane information used to determine the EAS. Specifically, the information may be information about an application-side endpoint of a user plane path, for example, a potential location (which may be represented by a DNAI) of an application. The identifier of the edge application server may further include latency corresponding to the DNAI, and the like.

For ease of description, in this embodiment of this application, an example in which the identifier of the edge application server includes the DNAI is used for description. However, it should be understood that the identifier of the edge application server may be the DNAI. This is not limited in this application.

S320: The application function network element obtains the edge application server load.

Specifically, the AF receives the second subscription message for the EAS load from the first function network element, and initiates, to the EAS, edge application server load detection for the DNAI or the Appid. Correspondingly, the EAS feeds back the edge application server load obtained through detection to the AF.

Optionally, the edge application server load includes a status of the edge application server load, for example, normality of the edge application server load, or abnormality of the edge application server load.

Optionally, the edge application server load further includes a level of the edge application server load, or a percentage of the edge application server load.

S330: The application function network element sends second indication information to the first function network element. The second indication information indicates the edge application server load.

Optionally, the second indication information includes at least one of the following: information indicating the level of the edge application server load, or information indicating the percentage of the edge application server load.

Optionally, the AF may send the second indication information to the first function network element when a trigger condition is satisfied.

For example, the trigger condition may be abnormality of the EAS load.

For example, the abnormality of the EAS load is that the EAS is overloaded, or the EAS cannot provide a service.

It should be understood that the AF may alternatively send indication information to the first function network element under another trigger condition (for example, when the edge application server is faulty). This is not limited in this application.

Correspondingly, the first function network element receives the second indication information from the AF. The second indication information indicates the edge application server load, and the first function network element performs a reselection operation based on the edge application server load. Alternatively, the second indication information indicates the first function network element to reselect an edge application server or reselect an application for a terminal device.

S340: The first function network element performs the operation, where the operation includes at least one of the following: reselecting an edge application server or reselecting an application.

It should be understood that "reselect" herein may also be referred to as "switch" and the like. For example, "reselect an edge application server" may also be referred to as "switch an edge application server". For another example, "reselect an application" may also be referred to as "switch an application".

That is, a reselected edge application server is different from a current edge application server, and correspondingly, a reselected application is different from a current application.

The following describes some specific implementations of this application with reference to FIG. 6a and FIG. 6b to FIG. 9a and FIG. 9b. It should be understood that those are merely some implementations of this application, and cannot be construed as a limitation on this application.

FIG. 6a and FIG. 6b are an interaction diagram of a communication method according to an embodiment of this application. The method 400 may be considered as a specific implementation of the method 200. The method 400 may include the following steps.

S410A: UE establishes a session. S410B: The UE establishes the session to access a plurality of applications on an EAS #1 through an LUPF #1.

Optionally, the session is a protocol data unit (Protocol Data Unit, PDU) session.

It should be understood that the session is established for a terminal device to transmit data of communication.

S420: A first function network element subscribes to N6 interface latency from the LUPF #1.

The subscription includes an APPid or a DNAI, and an N6 interface latency reporting criterion, and the N6 interface latency reporting criterion is used to report a status of the N6 interface latency, for example, abnormality of the N6 interface latency, or the N6 interface latency criterion is used to report a value of the N6 interface latency at a specific periodicity.

For example, the N6 interface latency reporting criterion specifies that reporting is performed when the N6 interface latency is greater than 10 ms, or reporting is performed when the N6 interface latency is abnormal. For ease of description, abnormality of the N6 interface latency is used as an example in this application. However, this application is not limited thereto.

Optionally, the subscription includes an application identifier (APPid), and the subscription is used to subscribe to N6 interface latency for an application.

Optionally, the subscription includes an identifier of an edge application server, and the subscription is used to subscribe to N6 interface latency for the edge application server.

S430: The LUPF #1 initiates N6 interface latency detection to the EAS #1.

It should be noted that after receiving the N6 interface latency detection initiated by the LUPF #1, the EAS #1 sends the N6 interface latency to the LUPF #1.

S440: After receiving the N6 interface latency sent by the EAS #1, the LUPF #1 reports to the first function network element according to the N6 interface latency reporting criterion, for example, sends the abnormality of the N6 interface latency to the first function network element, to indicate the first function network element to perform a reselection operation.

It should be understood that the first function network element performs the reselection operation based on the received abnormality of the N6 interface latency. The reselection operation includes: reselecting a user plane function network element, that is, the following steps S450 (a1) to S450 (a5) (Manner 1), reselecting an edge application server, that is, the following steps S450 (b1) to S450 (b4) (Manner 2), or reselecting an application, that is, the following steps S450 (c1) to S450 (c4) (Manner 3). One of Manner 1, Manner 2, and Manner 3 may be selected for execution. This is not limited in this embodiment of this application.

S450 (a1): The first function network element reselects an LUPF #2.

For example, the first function network element makes a decision, and determines to reselect the LUPF #2.

S450 (a2): The first function network element requests the LUPF #2 to modify the session to the reselected LUPF #2, where the request includes tunnel information for connecting to the LUPF #2.

Optionally, the tunnel information includes N9 interface tunnel information or N3 interface tunnel information.

S450 (a3): The UE may continue to access the plurality of applications on the EAS #1 through the reselected LUPF #2, to transmit data.

Optionally, if the reselected LUPF #2 is related to a ULCL or an I-UPF, the first function network element may request an SMF to insert/modify the ULCL or the I-UPF, and the request includes the tunnel information for connecting to the reselected LUPF #2. The SMF initiates session modification to the selected ULCL or I-UPF. For example, the following steps are performed: S450 (a4): The first function network element requests the SMF to insert or modify the ULCL or the I-UPF; and S450 (a5): The SMF initiates session modification to the ULCL.

S450 (b1): The first function network element reselects an EAS #2.

For example, the first function network element makes a decision, and determines to reselect the EAS #2.

S450 (b2): The first function network element requests an AF to update the reselected EAS #2, where the request includes an DNAI of the reselected EAS #2.

S450 (b3): The AF updates the reselected EAS #2.

S450 (b4): The UE may access a plurality of applications on the reselected EAS #2 through the LUPF #1, to transmit data.

S450 (c1): The first function network element reselects an application.

For example, the first function network element makes a decision, and determines to reselect the application.

S450 (c2): The first function network element requests an AF to update the reselected application, where the request includes an APPid of the reselected application.

S450 (c3): The AF updates the reselected application.

S450 (c4): The UE may access the reselected application on the EAS #1 through the LUPF #1, to transmit data.

Based on the foregoing solution, a network element on a data transmission path is reselected to replace a current network element for communication, so that a communication path can be further optimized, stability and reliability of data transmission can be ensured, and communication quality can be improved.

It should be understood that, in the foregoing steps S450 (a1) to S450 (a5), S450 (b1) to S450 (b4), and S450 (c1) to S450 (c4), the network element is reselected to replace the current network element to transmit the data of the communication, so that the communication path can be further optimized. For example, in S450 (a1) to S450 (a5), the reselected LUPF #2 is used to replace the LUPF #1 for communication, and a communication path in which the UE accesses the plurality of applications on the EAS #1 through the LUPF #1 is changed to a communication path in which the UE accesses the plurality of applications on the EAS #1 through the LUPF #2, so that data transmission is ensured. Other steps are similar, and details are not described herein again.

It should be understood that a quantity of local user plane function network elements and a quantity of edge application servers are not limited in this application. For example, the local user plane function network element may include one or more network elements, one or more network slices, or the like. For another example, the edge application server may include one or more servers, one or more network slices, or the like.

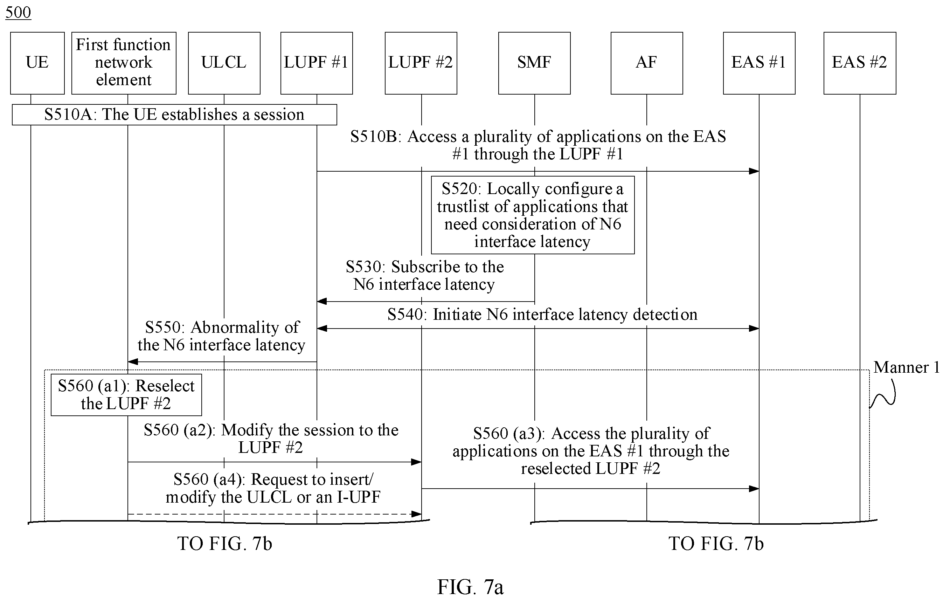

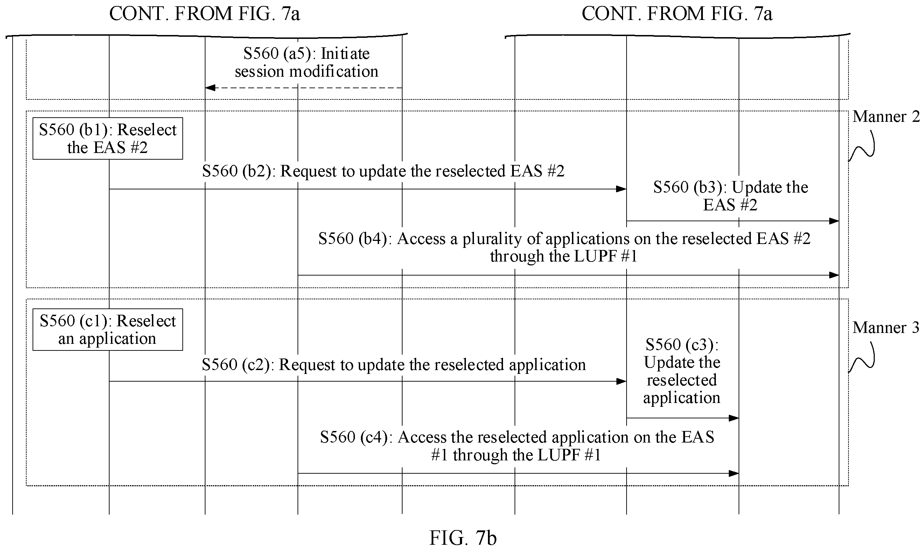

FIG. 7a and FIG. 7b are an interaction diagram of a communication method according to an embodiment of this application. The method 500 may be considered as another specific implementation of the method 200. The method 500 may include the following steps.

S510A: UE establishes a session. S510B: The UE establishes the session to access a plurality of applications on an EAS #1 through an LUPF #1.

Optionally, the session is a PDU session.

It should be understood that the session is established for a terminal device to transmit data of communication.

S520: An SMF locally configures a trustlist of applications that need consideration of the N6 interface latency, where each application in the application trustlist corresponds to one APPid.

It should be noted that an application in the application trustlist is used to request a first function network element to perform an operation based on the N6 interface latency.

S530: For an application in the application trustlist, the SMF sends a subscription to the N6 interface latency to the LUPF #1, where the subscription includes an identifier of the first function network element and an N6 interface latency reporting criterion.

The N6 interface latency reporting criterion is used to report a status of the N6 interface latency, for example, abnormality of the N6 interface latency, or the N6 interface latency criterion is used to report a value of the N6 interface latency at a specific periodicity.

For example, the N6 interface latency reporting criterion specifies that reporting is performed when the N6 interface latency is greater than 10 ms, or reporting is performed when the N6 interface latency is abnormal. For ease of description, abnormality of the N6 interface latency is used as an example in this application. However, this application is not limited thereto.

Optionally, the subscription includes an application identifier (APPid), and the subscription is used to subscribe to N6 interface latency for an application.

Optionally, the subscription includes an identifier of an edge application server, and the subscription is used to subscribe to N6 interface latency for the edge application server.

S540: The LUPF #1 initiates N6 interface latency detection to the EAS #1.

It should be noted that after receiving the N6 interface latency detection initiated by the LUPF #1, the EAS #1 sends the N6 interface latency to the LUPF #1.

S550: After receiving the N6 interface latency sent by the EAS #1, the LUPF #1 reports to the first function network element according to the N6 interface latency reporting criterion, for example, sends the abnormality of the N6 interface latency to the first function network element, to indicate the first function network element to perform a reselection operation.

It should be understood that the first function network element performs the reselection operation based on the received abnormality of the N6 interface latency. The reselection operation includes: reselecting a user plane function network element, that is, the following steps S560 (a1) to S560 (a5) (Manner 1), reselecting an edge application server, that is, the following steps S560 (b1) to S560 (b4) (Manner 2), or reselecting an application, that is, the following steps S560 (c1) to S560 (c4) (Manner 3). One of Manner 1, Manner 2, and Manner 3 may be selected for execution. This is not limited in this embodiment of this application.

S560 (a1): The first function network element reselects an LUPF #2.

For example, the first function network element makes a decision, and determines to reselect the LUPF #2.

S560 (a2): The first function network element requests the LUPF #2 to modify the session to the reselected LUPF #2, where the request includes tunnel information for connecting to the LUPF #2.

Optionally, the tunnel information includes N9 interface tunnel information or N3 interface tunnel information.

S560 (a3): The UE may continue to access the plurality of applications on the EAS #1 through the reselected LUPF #2, to transmit data.

Optionally, if the reselected LUPF #2 is related to a ULCL or an I-UPF, the first function network element may request the SMF to insert/modify the ULCL or the I-UPF, and the request includes the tunnel information for connecting to the reselected LUPF. The SMF initiates session modification to the selected ULCL or I-UPF. For example, the following steps are performed: S560 (a4): The first function network element requests the SMF to insert or modify the ULCL or the I-UPF; and S560 (a5): The SMF initiates session modification to the ULCL.

S560 (b1): The first function network element reselects an EAS #2.

For example, the first function network element makes a decision, and determines to reselect the EAS #2.

S560 (b2): The first function network element requests an AF to update the reselected EAS #2, where the request includes an DNAI of the reselected EAS #2.

S560 (b3): The AF updates the reselected EAS #2.

S560 (b4): The UE may access a plurality of applications on the reselected EAS #2 through the LUPF #1, to transmit data.

S560 (c1): The first function network element reselects an application.

For example, the first function network element makes a decision, and determines to reselect the application.

S560 (c2): The first function network element requests an AF to update the reselected application, where the request includes an APPid of the reselected application.

S560 (c3): The AF updates the reselected application.

S560 (c4): The UE may access the reselected application on the EAS #1 through the LUPF #1, to transmit data.

Based on the foregoing solution, a network element on a data transmission path is reselected to replace a current network element for communication, so that a communication path can be further optimized, stability and reliability of data transmission can be ensured, and communication quality can be improved.

It should be understood that, in the foregoing steps S560 (a1) to S560 (a5), S560 (b1) to S560 (b4), and S560 (c1) to S560 (c4), the network element is reselected to replace the current network element to transmit the data of the communication, so that the communication path can be further optimized. For example, in S560 (a1) to S560 (a5), the reselected LUPF #2 is used to replace the LUPF #1 for communication, and a communication path in which the UE accesses the plurality of applications on the EAS #1 through the LUPF #1 is changed to a communication path in which the UE accesses the plurality of applications on the EAS #1 through the LUPF #2, so that data transmission is ensured. Other steps are similar, and details are not described herein again.

It should be understood that a quantity of local user plane function network elements and a quantity of edge application servers are not limited in this application. For example, the local user plane function network element may include one or more network elements, one or more network slices, or the like. For another example, the edge application server may include one or more servers, one or more network slices, or the like.

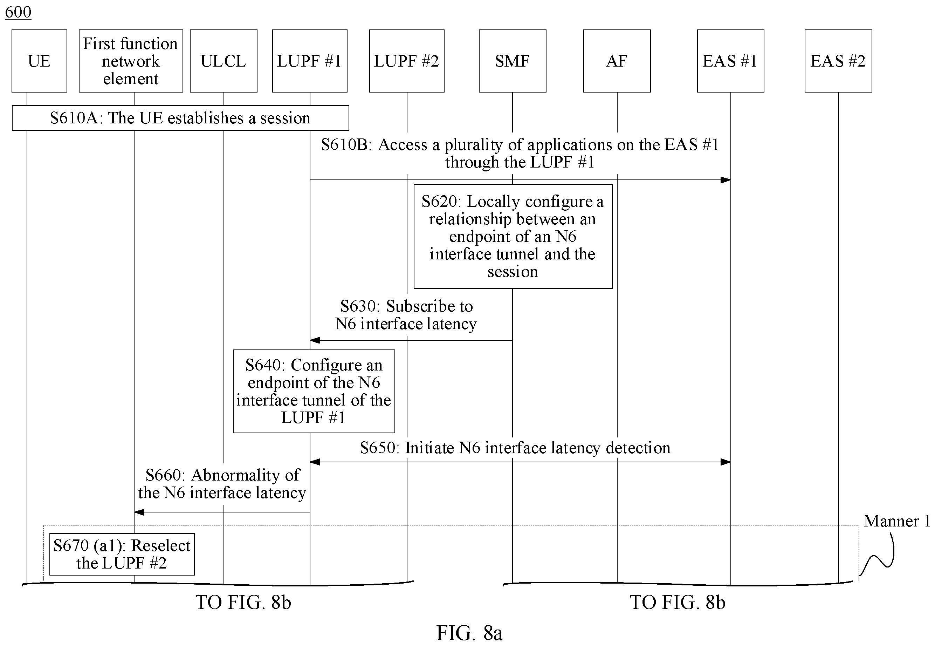

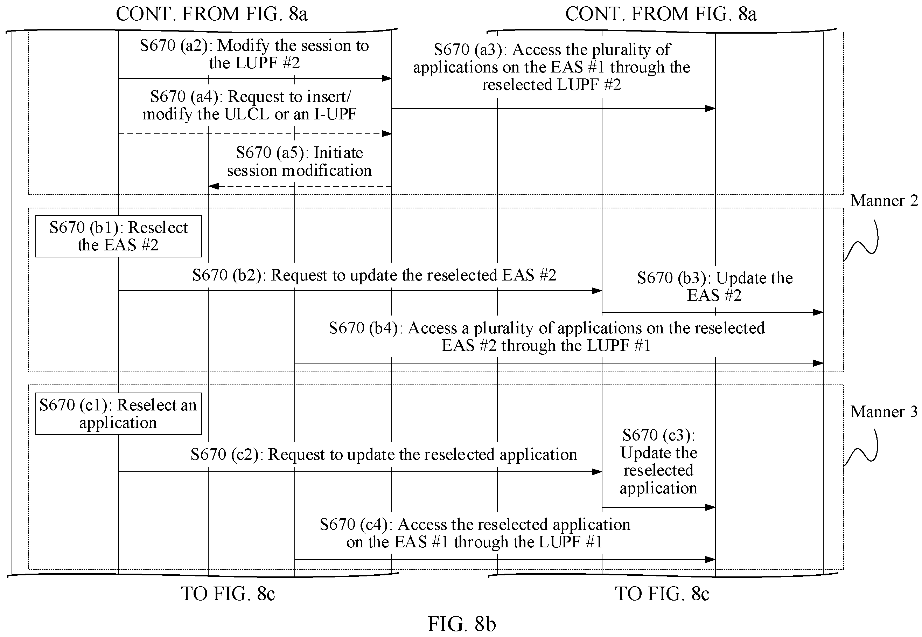

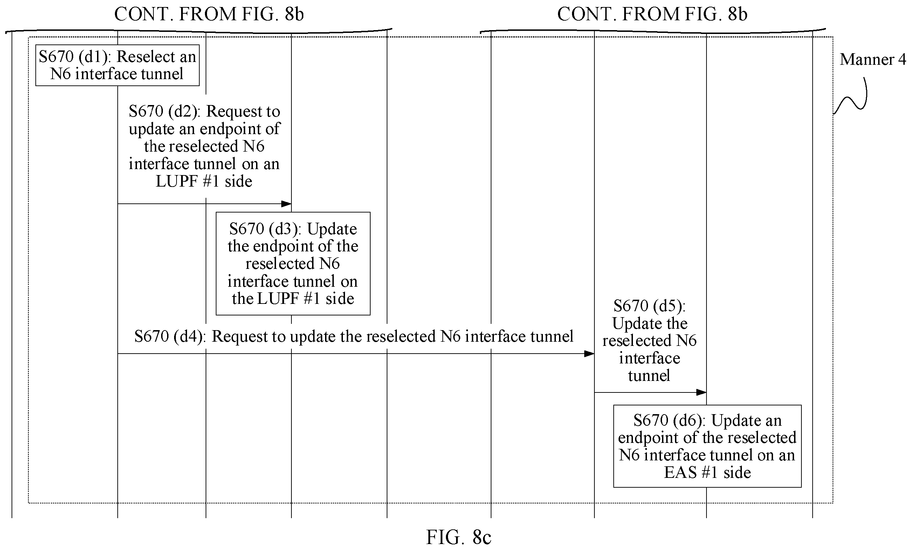

FIG. 8a, FIG. 8b and FIG. 8c are an interaction diagram of a communication method according to an embodiment of this application. The method 600 may be considered as another specific implementation of the method 200. The method 600 may include the following steps.

S610A: UE establishes a session. S610B: The UE establishes the session to access a plurality of applications on an EAS #1 through an LUPF #1.

Optionally, the session is a PDU session.

It should be understood that the session is established for a terminal device to transmit data of communication.

S620: An SMF locally configures a relationship between an endpoint of an N6 interface tunnel and the session.

S630: The SMF subscribes to N6 interface latency from the LUPF #1.

The subscription includes an endpoint of an N6 interface tunnel of the ESA#1, an identifier of a first function network element, and an N6 interface latency reporting criterion.

The N6 interface latency reporting criterion is used to report a status of the N6 interface latency, for example, abnormality of the N6 interface latency, or the N6 interface latency criterion is used to report a value of the N6 interface latency at a specific periodicity.

For example, the N6 interface latency reporting criterion specifies that reporting is performed when the N6 interface latency is greater than 10 ms, or reporting is performed when the N6 interface latency is abnormal. For ease of description, abnormality of the N6 interface latency is used as an example in this application. However, this application is not limited thereto.

Optionally, the subscription includes an application identifier (APPid), and the subscription is used to subscribe to N6 interface latency for an application.

Optionally, the subscription includes an identifier of an edge application server, and the subscription is used to subscribe to N6 interface latency for the edge application server.

S640: The LUPF #1 configures an endpoint of the N6 interface tunnel.

S650: The LUPF #1 initiates N6 interface latency detection to the EAS #1.

It should be noted that after receiving the N6 interface latency detection initiated by the LUPF #1, the EAS #1 sends the N6 interface latency to the LUPF #1.

S660: After receiving the N6 interface latency sent by the EAS #1, the LUPF #1 reports to the first function network element according to the N6 interface latency reporting criterion, for example, sends the abnormality of the N6 interface latency to the first function network element, to indicate the first function network element to perform a reselection operation.

It should be understood that the first function network element performs the reselection operation based on the received abnormality of the N6 interface latency. The reselection operation includes: reselecting a user plane function network element, that is, the following steps S670 (a1) to S670 (a5) (Manner 1), reselecting an edge application server, that is, the following steps S670 (b1) to S670 (b4) (Manner 2), reselecting an application, that is, the following steps S670 (c1) to S670 (c4) (Manner 3), or reselecting an N6 interface tunnel, that is, the following steps S670 (d1) to S670 (d6) (Manner 4). One of Manner 1, Manner 2, Manner 3, and Manner 4 may be selected for execution. This is not limited in this embodiment of this application.

S670 (a1): The first function network element reselects an LUPF #2.

For example, the first function network element makes a decision, and determines to reselect the LUPF #2.

S670 (a2): The first function network element requests the LUPF #2 to modify the session to the reselected LUPF #2, where the request includes tunnel information for connecting to the LUPF #2.

Optionally, the tunnel information includes N9 interface tunnel information or N3 interface tunnel information.

S670 (a3): The UE may continue to access the plurality of applications on the EAS #1 through the reselected LUPF #2, to transmit data.

Optionally, if the reselected LUPF #2 is related to a ULCL or an I-UPF, the first function network element may request the SMF to insert/modify the ULCL or the I-UPF, and the request includes the tunnel information for connecting to the reselected LUPF. The SMF initiates session modification to the selected ULCL or I-UPF. For example, the following steps are performed: S560 (a4): The first function network element requests the SMF to insert or modify the ULCL or the I-UPF; and S560 (a5): The SMF initiates session modification to the ULCL.

S670 (b1): The first function network element reselects an EAS #2.

For example, the first function network element makes a decision, and determines to reselect the EAS #2.

S670 (b2): The first function network element requests an AF to update the reselected EAS #2, where the request includes an DNAI of the reselected EAS #2.

S670 (b3): The AF updates the reselected EAS #2.

S670 (b4): The UE may access a plurality of applications on the reselected EAS #2 through the LUPF #1, to transmit data.

S670 (c1): The first function network element reselects an application.

For example, the first function network element makes a decision, and determines to reselect the application.

S670 (c2): The first function network element requests an AF to update the reselected application, where the request includes an APPid of the reselected application.

S670 (c3): The AF updates the reselected application.

S670 (c4): The UE may access the reselected application on the EAS #1 through the LUPF #1, to transmit data.

S670 (d1): The first function network element reselects an N6 interface tunnel.

For example, the first function network element makes a decision, and determines to reselect the N6 interface tunnel.

S670 (d2): The first function network element requests the LUPF #1 to update an endpoint of the reselected N6 interface tunnel.

S670 (d3): The LUPF #1 updates the endpoint of the reselected N6 interface tunnel.

S670 (d4): The first function network element requests an AF to update the reselected N6 interface tunnel, where the request includes endpoint information of the reselected N6 interface tunnel.

S670 (d5): The AF sends a request to the EAS to update the reselected N6 interface tunnel.

S670 (d6): The EAS #1 updates an endpoint of the reselected N6 interface tunnel.

Based on the foregoing solution, a network element on a data transmission path is reselected to replace a current network element for communication, so that a communication path can be further optimized, stability and reliability of data transmission can be ensured, and communication quality can be improved.

It should be understood that, in the foregoing steps S670 (a1) to S670 (a5), S670 (b1) to S670 (b4), S670 (c1) to S670 (c4), and S670 (d1) to S670 (d6), the network element is reselected to replace the current network element to transmit the data of the communication, so that the communication path can be further optimized. For example, in S670 (a1) to S670 (a5), the reselected LUPF #2 is used to replace the LUPF #1 for communication, and a communication path in which the UE accesses the plurality of applications on the EAS #1 through the LUPF #1 is changed to a communication path in which the UE accesses the plurality of applications on the EAS #1 through the LUPF #2, so that data transmission is ensured. Other steps are similar, and details are not described herein again.

It should be understood that a quantity of local user plane function network elements and a quantity of edge application servers are not limited in this application. For example, the local user plane function network element may include one or more network elements, one or more network slices, or the like. For another example, the edge application server may include one or more servers, one or more network slices, or the like.

FIG. 9a and FIG. 9b are an interaction diagram of a communication method according to an embodiment of this application. The method 700 may be considered as another specific implementation of the method 300. The method 700 may include the following steps.

S710A: UE establishes a session. S710B: The UE establishes the session to access a plurality of applications on an EAS #1 through an LUPF #1.

Optionally, the session is a PDU session.

It should be understood that the session is established for a terminal device to transmit data of communication.

S720: A first function network element subscribes to an EAS load from an AF.

The subscription includes an APPid or a DNAI, and an EAS load reporting criterion. The EAS load reporting criterion is used to report an EAS load status, for example, abnormality of the EAS load, or the EAS load reporting criterion is used to report a level or a percentage of the EAS load at a specific periodicity.

For example, the EAS load reporting criterion specifies that reporting is performed when the EAS load is greater than a threshold, or a current EAS load value is reported at a periodicity.

Optionally, the subscription includes an identifier of an edge application server, and the subscription is used to subscribe to an edge application server load of the edge application server corresponding to the identifier of the edge application server.

Optionally, the subscription includes an application identifier (Appid), and the subscription is used to subscribe to an edge application server load of an application corresponding to the application identifier.

S730: The AF initiates edge application server load detection to the EAS #1.

It should be noted that after receiving the edge application server load detection initiated by the AF, the EAS #1 sends the edge application server load to the AF.

Correspondingly, in S740, the AF receives the edge application server load from the EAS #1. In a possible implementation, the AF sends the edge application server load to the first function network element when a trigger condition is satisfied.

The trigger condition may be, for example, abnormality of the edge application server load.

S750: The AF sends the abnormality of the edge application server load to the first function network element, to indicate the first function network element to perform a reselection operation.

It should be understood that the first function network element performs the reselection operation based on the received abnormality of the edge application server load. The reselection operation includes: reselecting an edge application server, that is, the following steps S760 (a1) to S760 (a4) (Manner 1), or reselecting an application, that is, the following steps S760 (b1) to S760 (b4) (Manner 2). One of Manner 1 and Manner 2 may be selected for execution. This is not limited in this embodiment of this application.

S760 (a1): The first function network element reselects an EAS #2.

For example, the first function network element makes a decision, and determines to reselect the EAS #2.

S760 (a2): The first function network element requests the AF to update the reselected EAS #2, where the request includes an DNAI of the reselected EAS #2.

S760 (a3): The AF updates the reselected EAS #2.

S760 (a4): The UE may access a plurality of applications on the reselected EAS #2 through the LUPF #1, to transmit data.

S760 (b1): The first function network element reselects an application.

For example, the first function network element makes a decision, and determines to reselect the application.

S760 (b2): The first function network element requests the AF to update the reselected application, where the request includes an APPid of the reselected application.

S760 (b3): The AF updates the reselected application.

S760 (b4): The UE may access the reselected application on the EAS #1 through the LUPF #1, to transmit data.

Based on the foregoing solution, a network element on a data transmission path is reselected to replace a current network element for communication, so that a communication path can be further optimized, stability and reliability of data transmission can be ensured, and communication quality can be improved.

It should be understood that, in the foregoing steps S760 (a1) to S760 (a4) and S760 (b1) to S760 (b4), the network element is reselected to replace the current network element to transmit the data of the communication, so that the communication path can be further optimized. For example, in S760 (a1) to S760 (a4), the reselected EAS #2 is used to replace the EAS #1 for communication, and a communication path in which the UE accesses the plurality of applications on the EAS #1 through the LUPF #1 is changed to a communication path in which the UE accesses the plurality of applications on the EAS #2 through the LUPF #1, so that data transmission is ensured. Other steps are similar, and details are not described herein again.

It should be understood that a quantity of local user plane function network elements and a quantity of edge application servers are not limited in this application. For example, the local user plane function network element may include one or more network elements, one or more network slices, or the like. For another example, the edge application server may include one or more servers, one or more network slices, or the like.

In conclusion, in the foregoing embodiment, whether communication is abnormal is represented by detecting the N6 interface latency or the edge application server load. When the N6 interface latency or the edge application server load is abnormal, indication information is sent, and the first function network element performs a reselection operation based on the indication information. The first function network element performs the reselection operation, thereby effectively mitigating network interruption caused by abnormal N6 interface latency or excessive load on the EAS. There are four reselection operation solutions. To be specific, the first function network element may reselect a user plane function network element, an edge application server, an application, or an N6 interface tunnel. A plurality of reselection solutions are provided for selection.

In correspondence to the method provided in the foregoing method embodiments, an embodiment of this application further provides a corresponding apparatus. The apparatus includes a corresponding module configured to perform the foregoing method embodiments. The module may be software, hardware, or a combination of the software and the hardware. It may be understood that the technical features described in the method embodiments are also applicable to the following apparatus embodiments.

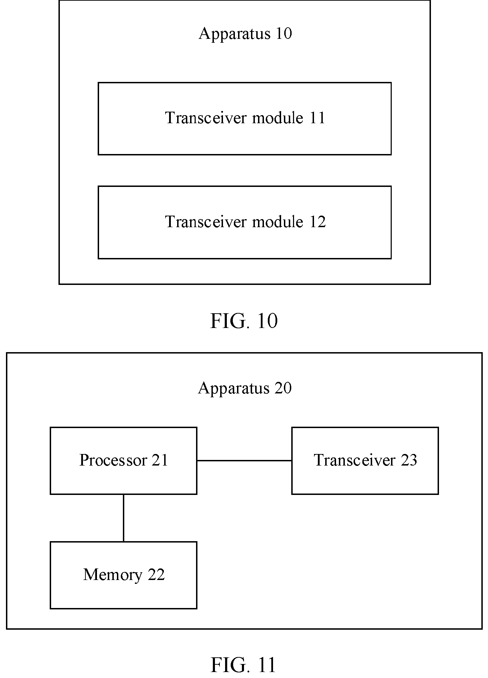

FIG. 10 is a block diagram of a communication apparatus according to an embodiment of this application. The apparatus 10 includes a transceiver module 11 and a processing module 12. The transceiver module 11 may be configured to implement a corresponding communication function. The transceiver module 11 may also be referred to as a communication interface or a communication unit. The processing module 12 may be configured to implement a corresponding processing function, for example, perform a reselection operation based on indication information from a second function network element.

Optionally, the apparatus 10 may further include a storage module. The storage module may be configured to store instructions and/or data. The processing module 12 may read the instructions and/or the data in the storage module, so that the apparatus implements actions of a device or a network element in the foregoing method embodiments.

In a first design, the apparatus 10 may be the first function network element in the foregoing embodiment, or may be a component (for example, a chip or a chip system) of the first function network element. The apparatus 10 may implement corresponding steps or procedures performed by the first function in the foregoing method embodiment. The transceiver module 11 may be configured to perform receiving and sending related operations of the first function network element in the foregoing method embodiments, and the processing module 12 may be configured to perform processing related operations of the first function network element in the foregoing method embodiments.

In a first possible implementation, the transceiver module 11 is configured to receive first indication information from a first user plane function network element, where the first indication information indicates first interface latency.

The processing module 12 is configured to perform at least one of the following operations based on the first indication information: selecting a second user plane function network element, where the second user plane function network element is different from the first user plane function network element; selecting a second edge application server, where the second edge application server is different from the first edge application server; selecting a second application on the first edge application server, where the second application is different from the first application; or selecting a second tunnel of the first interface, where the second tunnel is different from the first tunnel.

In some possible implementations, the transceiver module 11 is further configured to send a first subscription message to the first user plane function network element, where the first subscription message is used to subscribe to the first interface latency.

Optionally, the first subscription message includes an identifier of the first application, and the first subscription message is used to subscribe to interface latency for the first application.

Optionally, the first subscription message includes an identifier of the first edge application server, and the first subscription message is used to subscribe to interface latency for the first edge application server.

Optionally, the first subscription message includes information about the first tunnel, and the first subscription message is used to subscribe to interface latency for the first tunnel.

In some possible implementations, the transceiver module 11 is further configured to send a result of the operation to an application function network element.

Optionally, when the first interface latency is the interface latency of the first user plane function network element for the first application, the result includes an identifier of the second application.

Optionally, when the first interface latency is the interface latency of the first user plane function network element for the first edge application server, the result includes an identifier of the second edge application server.

Optionally, when the first interface latency is the interface latency of the first user plane function network element for the first tunnel, the result includes endpoint information of the second tunnel.

Optionally, when the first interface latency is the interface latency of the first user plane function network element for the first tunnel, the transceiver module 11 is further configured to send the result of the operation to the first user plane function network element.

In a second possible implementation, the transceiver module 11 is configured to receive second indication information from an application function network element, where the second indication information indicates an edge application server load.

The processing module 12 is configured to perform at least one of the following operations based on the second indication information: selecting a second edge application server, where the second edge application server is different from the first edge application server; or selecting a second application on the first edge application server, where the second application is different from the first application.

In some possible implementations, the transceiver module 11 is further configured to send a second subscription message to the application function network element, where the second subscription message is used to subscribe to a first edge application server load.

Optionally, the second subscription message includes an identifier of the first edge application server, and the second subscription message is used to subscribe to an edge application server load for the first edge application server.

Optionally, the second subscription message includes an identifier of the first application, and the second subscription message is used to subscribe to an edge application server load for the first application.

In some possible implementations, the transceiver module 11 is further configured to send a result of the operation to an application function network element.

Optionally, when the first edge application server load is the edge application server load for the first edge application server, the result includes an identifier of the second edge application server.

Optionally, when the first edge application server load is the edge application server load for the second application, the result includes an identifier of the second application.

In a second design, the apparatus 10 may be the user plane function network element in the foregoing embodiment, or may be a component (for example, a chip or a chip system) of the user plane function network element. The apparatus 10 may implement corresponding steps or procedures performed by the user plane function network element in the foregoing method embodiments. The transceiver module 11 may be configured to perform receiving and sending related operations of the user plane function network element in the foregoing method embodiments, and the processing module 12 may be configured to perform processing related operations of the user plane function network element in the foregoing method embodiments.

In a possible implementation, the transceiver module 11 is configured to receive a first subscription message, where the first subscription message is used to subscribe to first interface latency, and the first interface latency includes at least one of the following: interface latency of a first user plane function network element for a first application, interface latency of a first user plane function network element for a first edge application server, or interface latency of a first user plane function network element for a first tunnel, where the first interface is between the first user plane function network element and the first edge application server that are selected for communication of a terminal device.

Optionally, the first subscription message includes an identifier of the first application, and the first subscription message is used to subscribe to the interface latency for the first application.

Optionally, the first subscription message includes an identifier of the first edge application server, and the second subscription message is used to subscribe to the interface latency for the first edge application server.

Optionally, the first subscription message includes information about the first tunnel, and the third subscription message is used to subscribe to the interface latency for the first tunnel.

Optionally, the processing module 12 is configured to determine N6 interface latency.

In a possible implementation, the transceiver module 11 is further configured to send first indication information to a first function network element, where the first indication information indicates the first interface latency.

In a possible implementation, the transceiver module 11 is further configured to send a first detection request to the first edge application server.

Optionally, when the first interface latency is the interface latency of the first user plane function network element for the first application, the first detection request is used to request to detect the interface latency for the first application.

Optionally, when the first interface latency is the interface latency of the first user plane function network element for the first edge application server, the first detection request is used to request to detect the interface latency for the first edge application server.

Optionally, when the first interface latency is the interface latency of the first user plane function network element for the first tunnel, the first detection request is used to request to detect the interface latency for the first tunnel.

In a possible implementation, the transceiver module 11 is further configured to receive endpoint information of the second tunnel.

Optionally, the processing module 12 is configured to update an endpoint of the second tunnel.

In a third design, the apparatus 10 may be the application function network element in the foregoing embodiment, or may be a component (for example, a chip or a chip system) of the application function network element. The apparatus 10 may implement corresponding steps or procedures performed by the application function network element in the foregoing method embodiments. The transceiver module 11 may be configured to perform receiving and sending related operations of the application function network element in the foregoing method embodiments, and the processing module 12 may be configured to perform processing related operations of the application function network element in the foregoing method embodiments.

In a possible implementation, the transceiver module 11 is configured to receive a second subscription message, where the second subscription message is used to subscribe to an edge application server load, and the edge application server load includes at least one of the following: an edge application server load for a first edge application server, or an edge application server load for a first application.

Optionally, the second subscription message includes an identifier of the first edge application server, and the second subscription message is used to subscribe to the edge application server load for the first edge application server.

Optionally, the second subscription message includes an identifier of the second application, and the second subscription message is used to subscribe to the edge application server load for the second application.

Optionally, the processing module 12 is configured to determine the edge application server load.

In a possible implementation, the transceiver module 11 is further configured to send second indication information to a first function network element, where the second indication information indicates a first edge application server load, and the first edge application server load is used to perform at least one of the following operations: selecting a second edge application server, where the second edge application server is different from the first edge application server; or selecting a second application on the first edge application server, where the second application is different from the first application.

In a possible implementation, the transceiver module 11 is further configured to send a second detection request to the first edge application server.

Optionally, when the first edge application server load is the edge application server load for the first edge application server, the second detection request is used to request to detect the edge application server load for the first edge application server.

Optionally, when the first edge application server load is the edge application server load for the second application, the second detection request is used to request to detect the edge application server load for the second application.

In a possible implementation, the transceiver module 11 is further configured to receive a result of the operation.

Optionally, when the result includes the identifier of the second application, the processing module 12 is configured to update the second application.

Optionally, when the result includes an identifier of the second edge application server, the processing module 12 is configured to update the second edge application server.

Optionally, when the result includes endpoint information of a second tunnel, the processing module 12 is configured to update the second tunnel.

It should be understood that specific processes in which the modules perform the foregoing corresponding steps are described in detail in the foregoing method embodiments. For brevity, details are not described herein.

It should be further understood that the apparatus 10 herein is presented in a form of a functional module. The term "module" herein may be an application-specific integrated circuit (application specific-integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. In an optional example, a person skilled in the art may understand that the apparatus 10 may be specifically the first function network element in the foregoing embodiments, and may be configured to perform procedures and/or steps corresponding to the first function network element in the foregoing method embodiments. Alternatively, the apparatus 10 may be specifically the user plane function network element in the foregoing embodiments, and may be configured to perform procedures and/or steps corresponding to the user plane function network element in the foregoing method embodiments. Alternatively, the apparatus 10 may be specifically the application function network element in the foregoing embodiments, and may be configured to perform procedures and/or steps corresponding to the application network element in the foregoing method embodiments.

The apparatus 10 in each of the foregoing solutions has a function of implementing corresponding steps performed by the network device (for example, the first function network element, the user plane function network element, and the application function network element) in the foregoing methods. The function may be implemented by hardware, or may be implemented by hardware executing corresponding software. The hardware or the software includes one or more modules corresponding to the foregoing functions. For example, the transceiver module may be replaced by a transceiver (for example, a sending unit in the transceiver module may be replaced by a transmitter, and a receiving unit in the transceiver module may be replaced by a receiver), and another unit, for example, the processing module, may be replaced by a processor, to separately perform receiving-sending operations and a relevant processing operation in method embodiments.

In addition, the transceiver module 11 may alternatively be a transceiver circuit (for example, may include a receiving circuit and a sending circuit), and the processing module may be a processing circuit.

It should be noted that the apparatus in FIG. 10 may be the network element or the device in the foregoing embodiments, or may be a chip or a chip system, for example, a system-on-chip (system-on-chip, SoC). The transceiver module may be an input/output circuit or a communication interface. The processing module is a processor, a microprocessor, or an integrated circuit integrated on the chip. This is not limited herein.

As shown in FIG. 11, an embodiment of this application further provides another communication apparatus 20. The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21.

Optionally, as shown in FIG. 11, the apparatus 20 further includes the memory 22. The memory 22 is configured to store the computer program or the instructions and/or the data. The memory 22 and the processor 21 may be integrated together, or may be disposed separately. Optionally, there are one or more memories 22.

Optionally, as shown in FIG. 11, the apparatus 20 further includes a transceiver 23. The transceiver 23 is configured to receive and/or send a signal. For example, the processor 21 is configured to control the transceiver 23 to receive and/or send a signal.

In a solution, the apparatus 20 is configured to implement operations performed by each network element or device in the foregoing method embodiments.

For example, the processor 21 is configured to execute the computer program or the instructions stored in the memory 22, to implement operations related to the first function network element in the foregoing method embodiments, for example, the method performed by the first function network element in the embodiment shown in FIG. 4 or FIG. 5, or the method performed by the first function network element in any one of the embodiments shown in FIG. 6a and FIG. 6b to FIG. 9a and FIG. 9b.

For another example, the processor 21 is configured to execute the computer program or the instructions stored in the memory 22, to implement operations related to the user plane function network element in the foregoing method embodiments, for example, the method performed by the user plane function network element in the embodiment shown in FIG. 4 or FIG. 5, or the method performed by the LUPF in any one of the embodiments shown in FIG. 6a and FIG. 6b to FIG. 9a and FIG. 9b.

For another example, the processor 21 is configured to execute the computer program or the instructions stored in the memory 22, to implement operations related to the user function network element in the foregoing method embodiments, for example, the method performed by the user function network element in the embodiment shown in FIG. 4 or FIG. 5, or the method performed by the AF in the embodiment shown in any one of the embodiments shown in FIG. 6a and FIG. 6b to FIG. 9a and FIG. 9b.

It should be understood that, the processor in embodiments of this application may be a central processing unit (central processing unit, CPU), or may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. Through example but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

An embodiment of this application further provides a computer-readable storage medium. The computer-readable storage medium stores computer instructions for implementing the method performed by the core network element in the foregoing method embodiments.

For example, when the computer program is executed by a computer, the computer is caused to implement the method performed by the first function network element in the foregoing method embodiments.

For another example, when the computer program is executed by a computer, the computer is caused to implement the method performed by the user plane function network element in the foregoing method embodiments.

For another example, when the computer program is executed by a computer, the computer is caused to implement the method performed by the application function network element in the foregoing method embodiments.

An embodiment of this application further provides a computer program product, including instructions. When the instructions are executed by a computer, the method performed by the core network element in the foregoing method embodiments is implemented.

An embodiment of this application further provides a communication system, including one or more of the first function network element, the user plane function network element, and the application function network element.

For explanations and beneficial effects of relevant content in any one of the apparatuses provided above, refer to the corresponding method embodiment provided above. Details are not described herein again.

In several embodiments provided in this application, it should be understood that the disclosed apparatus and method may be implemented in other manners. For example, described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first indication information from a first user plane function network element, wherein the first indication information indicates first interface latency, and the first interface latency comprises at least one of the following: interface latency of the first user plane function network element for a first application, interface latency of the first user plane function network element for a first edge application server, or interface latency of the first user plane function network element for a first tunnel, wherein the first interface is between the first user plane function network element and the first edge application server that are selected for communication of a terminal device; and
performing at least one of the following operations based on the first interface latency:
selecting a second user plane function network element, wherein the second user plane function network element is different from the first user plane function network element;
selecting a second edge application server, wherein the second edge application server is different from the first edge application server;
selecting a second application on the first edge application server, wherein the second application is different from the first application; or
selecting a second tunnel of the first interface, wherein the second tunnel is different from the first tunnel.

2. The method according to claim 1, wherein
the second user plane function network element is configured to replace the first user plane function network element to transmit data of the communication;
the second edge application server is configured to replace the first edge application server to transmit the data of the communication;
the second application is configured to replace the first application to transmit the data of the communication; and
the second tunnel is configured to replace the first tunnel to transmit the data of the communication.

3. The method according to claim 1 or 2, wherein the communication comprises communication between the terminal device and the first application, or communication between the terminal device and the second application.

4. The method according to any one of claims 1 to 3, wherein the method further comprises:
sending a result of the operation to an application function network element, wherein
when the first interface latency is the interface latency of the first user plane function network element for the first application, the result comprises an identifier of the second application;
when the first interface latency is the interface latency of the first user plane function network element for the first edge application server, the result comprises an identifier of the second edge application server; or
when the first interface latency is the interface latency of the first user plane function network element for the first tunnel, the result comprises endpoint information of the second tunnel.

5. The method according to claim 4, wherein when the first interface latency is the interface latency of the first user plane function network element for the first tunnel, the method further comprises: sending the result of the operation to the first user plane function network element.

6. The method according to any one of claims 1 to 5, wherein the receiving the first indication information from the first user plane function network element comprises:
receiving a first response message from the first user plane function network element, wherein the first response message is a response to a first subscription message, and the first response message comprises the first indication information.

7. The method according to claim 6, wherein the method further comprises:
sending the first subscription message to the first user plane function network element, wherein
the first subscription message comprises an identifier of the first application, and the first subscription message is used to subscribe to the interface latency for the first application;
the first subscription message comprises an identifier of the first edge application server, and the first subscription message is used to subscribe to the interface latency for the first edge application server; or
the first subscription message comprises information about the first tunnel, and the first subscription message is used to subscribe to the interface latency for the first tunnel.

8. The method according to any one of claims 1 to 7, wherein the first indication information comprises at least one of the following:
information indicating a status of the first interface latency, or information indicating a latency value of the first interface latency.

9. A communication method, comprising:
receiving second indication information from an application function network element, wherein the second indication information indicates a first edge application server load, and the first edge application server load comprises at least one of the following: an edge application server load for a first edge application server, or an edge application server load for a first application, wherein the first edge application server is an edge application server selected for communication of a terminal device; and
performing at least one of the following operations based on the first edge application server load:
selecting a second edge application server, wherein the second edge application server is different from the first edge application server; or
selecting a second application on the first edge application server, wherein the second application is different from the first application.

10. The method according to claim 9, wherein
the second edge application server is configured to replace the first edge application server to transmit data of the communication; and
the second application is configured to replace the first application to transmit the data of the communication.

11. The method according to claim 9 or 10, wherein the communication comprises communication between the terminal device and the first application, or communication between the terminal device and the second application.

12. The method according to any one of claims 9 to 11, wherein the method further comprises:
sending a result of the operation to the application function network element, wherein
when the first edge application server load is the edge application server load for the first edge application server, the result comprises an identifier of the second edge application server; or
when the first edge application server load is the edge application server load for the second application, the result comprises an identifier of the second application.

13. The method according to any one of claims 9 to 12, wherein the receiving the second indication information from the application function network element comprises:
receiving a second response message from the application function network element, wherein the second response message is a response to a second subscription message, and the second response message comprises the second indication information.

14. The method according to claim 13, wherein the method further comprises:
sending the second subscription message to the application function network element, wherein
the second subscription message comprises an identifier of the first edge application server, and the second subscription message is used to subscribe to the edge application server load for the first edge application server; or
the second subscription message comprises an identifier of the first application, and the second subscription message is used to subscribe to the edge application server load for the first application.

15. The method according to any one of claims 9 to 14, wherein the second indication information comprises at least one of the following:
information indicating a level of the first edge application server load, or information indicating a percentage of the first edge application server load.

16. A communication method, comprising:
obtaining first interface latency, wherein the first interface latency comprises at least one of the following: interface latency of a first user plane function network element for a first application, interface latency of a first user plane function network element for a first edge application server, or interface latency of a first user plane function network element for a first tunnel, wherein the first interface is between the first user plane function network element and the first edge application server that are selected for communication of a terminal device; and
sending first indication information, wherein the first indication information indicates the first interface latency, wherein
the first interface latency is used for at least one of the following operations:
selecting a second user plane function network element, wherein the second user plane function network element is different from the first user plane function network element;
selecting a second edge application server, wherein the second edge application server is different from the first edge application server;
selecting a second application on the first edge application server, wherein the second application is different from the first application; or
selecting a second tunnel of the first interface, wherein the second tunnel is different from the first tunnel.

17. The method according to claim 16, wherein
the second user plane function network element is configured to replace the first user plane function network element to transmit data of the communication;
the second edge application server is configured to replace the first edge application server to transmit the data of the communication;
the second application is configured to replace the first application to transmit the data of the communication; and
the second tunnel is configured to replace the first tunnel to transmit the data of the communication.

18. The method according to claim 16 or 17, wherein the communication comprises communication between the terminal device and the first application, or communication between the terminal device and the second application.

19. The method according to any one of claims 16 to 18, wherein the obtaining the first interface latency comprises:
sending a first detection request to the first edge application server; and
receiving the first interface latency, wherein
when the first interface latency is the interface latency of the first user plane function network element for the first application, the first detection request is used to request to detect the interface latency for the first application;
when the first interface latency is the interface latency of the first user plane function network element for the first edge application server, the first detection request is used to request to detect the interface latency for the first edge application server; or
when the first interface latency is the interface latency of the first user plane function network element for the first tunnel, the first detection request is used to request to detect the interface latency for the first tunnel.

20. The method according to any one of claims 16 to 19, wherein the sending the first indication information comprises:
receiving a first subscription message; and
sending a first response message, wherein the first response message is a response to the first subscription message, and the first response message comprises the first indication information, wherein
the first subscription message comprises an identifier of the first application, and the first subscription message is used to subscribe to the interface latency for the first application;
the first subscription message comprises an identifier of the first edge application server, and the first subscription message is used to subscribe to the interface latency for the first edge application server; or
the first subscription message comprises information about the first tunnel, and the first subscription message is used to subscribe to the interface latency for the first tunnel.

21. The method according to any one of claims 16 to 20, wherein when the first interface latency is the interface latency of the first user plane function network element for the first tunnel, the method further comprises:
receiving endpoint information of the second tunnel; and
updating an endpoint of the second tunnel.

22. A communication method, comprising:
obtaining a first edge application server load, wherein the first edge application server load comprises at least one of the following: an edge application server load for a first edge application server, or an edge application server load for a first application, wherein the first edge application server is an edge application server selected for communication of a terminal device; and
sending second indication information, wherein the second indication information indicates the first edge application server load, wherein
the first edge application server load is used for at least one of the following operations:
selecting a second edge application server, wherein the second edge application server is different from the first edge application server; or
selecting a second application on the first edge application server, wherein the second application is different from the first application.

23. The method according to claim 22, wherein
the second edge application server is configured to replace the first edge application server to transmit data of the communication; and
the second application is configured to replace the first application to transmit the data of the communication.

24. The method according to claim 23, wherein the communication comprises communication between the terminal device and the first application, or communication between the terminal device and the second application.

25. The method according to any one of claims 22 to 24, wherein the obtaining the first edge application server load comprises:
sending a second detection request to the first edge application server; and
receiving the first edge application server load, wherein
when the first edge application server load is the edge application server load for the first edge application server, the second detection request is used to request to detect the edge application server load for the first edge application server; or
when the first edge application server load is the edge application server load for the second application, the second detection request is used to request to detect the edge application server load for the second application.

26. The method according to any one of claims 22 to 25, wherein the sending the second indication information comprises:
receiving a second subscription message; and
sending a second response message, wherein the second response message is a response to the second subscription message, and the second response message comprises the second indication information, wherein
the second subscription message comprises an identifier of the first edge application server, and the second subscription message is used to subscribe to the edge application server load for the first edge application server; or
the second subscription message comprises an identifier of the second application, and the second subscription message is used to subscribe to the edge application server load for the second application.

27. The method according to any one of claims 22 to 26, wherein the method further comprises:
receiving a result of the operation; and
when the result comprises the identifier of the second application, updating the second application;
when the result comprises an identifier of the second edge application server, updating the second edge application server; or
when the result comprises endpoint information of the second tunnel, updating the second tunnel.

28. A communication apparatus, comprising:
a processor, configured to execute a computer program stored in a memory, to cause the apparatus to perform the method according to any one of claims 1 to 8, or to cause the apparatus to perform the method according to any one of claims 9 to 15.

29. A communication apparatus, comprising:
a processor, configured to execute a computer program stored in a memory, to cause the apparatus to perform the method according to any one of claims 16 to 21.

30. A communication apparatus, comprising:
a processor, configured to execute a computer program stored in a memory, to cause the apparatus to perform the method according to any one of claims 22 to 27.

31. A computer-readable storage medium, wherein the computer-readable storage medium stores a computer program, and when the computer program is run on a computer, the computer is caused to perform the method according to any one of claims 1 to 8, the computer is caused to perform the method according to any one of claims 9 to 15, the computer is caused to perform the method according to any one of claims 16 to 21, or the computer is caused to perform the method according to any one of claims 22 to 27.

32. A computer program product, wherein the computer program product comprises instructions used to perform the method according to any one of claims 1 to 8, the computer program product comprises instructions used to perform the method according to any one of claims 9 to 15, the computer program product comprises instructions used to perform the method according to any one of claims 16 to 21, or the computer program product comprises instructions used to perform the method according to any one of claims 22 to 27.

33. A communication system, comprising at least one of the following:
a first communication apparatus, wherein the first communication apparatus comprises a first function network element, and the first function network element is configured to perform the method according to any one of claims 1 to 8, or is configured to perform the method according to any one of claims 9 to 15;
a second communication apparatus, wherein the second communication apparatus comprises a user plane function network element, and the user plane function network element is configured to perform the method according to any one of claims 16 to 21; and
a third communication apparatus, wherein the third communication apparatus comprises an application function network element, and the application function network element is configured to perform the method according to any one of claims 22 to 27.
